(19) Europäisches Patentamt
European Patent Office
Office européen des brevets

(11) EP 4 082 890 A1

(12) EUROPEAN PATENT APPLICATION
published in accordance with Art. 153(4) EPC

(43) Date of publication:
02.11.2022 Bulletin 2022/44

(21) Application number: 20906351.0

(22) Date of filing: 24.12.2020

(51) International Patent Classification (IPC):
B63B 43/20 (2006.01)     B63B 49/00 (2006.01)
G08G 3/00 (2006.01)      G01S 13/87 (2006.01)
G01S 13/91 (2006.01)

(52) Cooperative Patent Classification (CPC):
B63B 43/20; B63B 49/00; G01S 13/87;
G01S 13/91; G08G 3/00

(86) International application number:
PCT/JP2020/048367

(87) International publication number:
WO 2021/132437 (01.07.2021 Gazette 2021/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.12.2019 JP 2019233798

(71) Applicant: Shimokawabe, Tomohiro
Shibuya-ku
Tokyo 151-0061 (JP)

(72) Inventor: Shimokawabe, Tomohiro
Shibuya-ku
Tokyo 151-0061 (JP)

(74) Representative: Feder Walter Ebert
Partnerschaft von Patentanwälten mbB
Achenbachstrasse 59
40237 Düsseldorf (DE)

(54) **ADMINISTRATIVE SERVER IN SHIP NAVIGATION ASSISTANCE SYSTEM, SHIP NAVIGATION ASSISTANCE METHOD, AND SHIP NAVIGATION ASSISTANCE PROGRAM**

(57) The present invention provides navigation assistance that is for small ships and that enables clear depiction of a radar image. An administrative server in a ship navigation assistance system, the server being equipped with: a communication means that performs, via a network, data transmission/reception with a user terminal which is connected to a device for detecting a target; and a vertex information management means that, of a plurality of target vertices extracted on the basis of detection result information of the target, identifies vertices moving together as a group as belonging to the same target, wherein, on the basis of the vertices that have been identified as belonging to the same target, the communication means transmits an instruction to the user terminal to display a rough outline of said target.

Fig.7

**Description**

FIELD OF THE INVENTION

The present invention relates to a navigation assistance system for a ship, and more particularly, to an administrative server for use in a navigation assistance system for a ship, a navigation assistance method for a ship, and a navigation assistance program for a ship.

BACKGROUND OF THE INVENTION

A device for detecting a target such as a radar or the like is used for various kinds of ships for supporting navigation of a ship.

It is known that a radar may not necessarily display an external shape of a target with precision due to the radar's performance, surrounding circumstances or the like. Especially in a case of a small ship, it is likely to be affected by environmental changes from the sea due to characteristics of a hull of a small ship. As a result, a swing is likely to be brought in the hull in a vertical direction and/or in a horizontal direction. Therefore, there is a case that a radar image may become obscure when intending to display the radar image as it is.

In addition, there are many kinds of oscillating output of magnetron used for a radar. In Japan, it is known that no qualification is required for a case of low output (for example, less than 5kW). For this reason, a low-output radar is used in many small ships.

As a result, there is a possibility that sufficient support for navigating a ship may not be obtained, especially in a case of a small ship having only a mounted radar.

As a background art of the present technical field, JP 2006-65831 A (Patent Document 1) is available. The Patent Document 1 discloses "arranging a movable radar-equipped ships which has a rotatable camera, a GPS and a communication system in each of a plurality of control areas which can be detected by a radar; wirelessly transmitting a position of the radar-equipped ship, a distance between the radar-equipped ship and a target ship located in the area, a direction and image information from a camera, from the radar-equipped ship to a control office on the ground; and displaying a positional relation between the radar-equipped ship and the target ship superimposedly on an image."

PATENT DOCUMENTS

[Patent Document 1] JP 2006-65831A

SUMMARY OF THE INVENTION

However, due to a performance limit of a radar mounted on a small ship, sufficient support for navigating a ship may not be obtained. For example, according to the Patent Document 1, image information of a target is wirelessly transmitted and displayed superimposedly. However, in a case that the image information obtained from the radar is not clear, an outline of a contour of a target may not be clearly displayed.

Therefore, the present invention provides a navigation assistance system for a ship by making possible to transmit and/or receive data between ships and land via a network, to perform image processing on a target image which is obtained from a device for detecting a target which is mounted on a small ship (or a plurality of small ships), and to integrate them so as to clearly display an outline of a contour of a target.

To solve the above-mentioned problems, for example, a constitution described in the claims can be used.

A plurality of measures for solving the above-mentioned problems are provided here, for example, an administrative server (or a management server) for use in a navigation assistance system for a ship is provided. The administrative server includes communication means for transmitting and/or receiving data to/from a user terminal via a network, and the user terminal is connected to a device for detecting a target. In addition, the administrative server includes vertex information management means for identifying vertices moving in a group as belonging to a common target from among a plurality of vertices which are extracted based on information on detection of the target. The communication means is configured to transmit an instruction to the user terminal to cause the user terminal to display an outline of a contour of the target (or a rough contour of the target) based on the vertices which are identified as belonging to the common target.

In addition, according to further aspects of the present invention, a navigation assistance method for a ship and an assistance program for navigating a ship are provided.

The present invention provides a navigation assistance system for a ship by making possible to transmit and/or receive data between ships and land via a network, to perform image processing on a target image which is obtained from a device for detecting a target which is mounted on a small ship (or a plurality of small ships), and to integrate them so as to clearly display an outline of a contour of a target.

Preferably, the present invention makes it possible to construct a network by using inexpensive and simple portable user terminals such as smartphones, tablet terminals and the like which can be used on small ships.

Other problems, configurations and effects other than those described above will be clarified by the following description of the embodiments.

BRIEF DESCRIPTION OF THE DRAWINGS

Fig. 1 illustrates an example of a conceptual diagram of a navigation assistance system for a ship. (Example 1)

FIG. 2 illustrates an example of a conceptual diagram of a circuit configuration of a device for detecting a target. (Example 1)

FIG. 3 illustrates an example of a conceptual diagram to show a flow of data among the user terminal, the administrative server, and the administrative terminal on the ground l. (Example 1)

Fig. 4 illustrates a modified example of the conceptual diagram to show the flow of data among the user terminal, the administrative server, and the administrative terminal on the ground illustrated in Fig. 3. (Example 1)

Figure 5 illustrates an example of a conceptual diagram of tasks which are performed in the image processing modules, dividing tasks according to (A), (B) and (C). (Example 1)

Figure 6 illustrates an example of a conceptual diagram of tasks which are performed in the vertex information managing module, dividing tasks according to (A), (B) and (C). (Example 1)

Figure 7 illustrates an example of a conceptual diagram of maps which can be shown on a display of the terminal, dividing maps according to (A) and (B). (Example 1)

Fig. 8 illustrates an example of a conceptual diagram at a time when one small ship is detected by a radar of each of the other two small ships. (Example 2)

Fig. 9 illustrates examples of detected results from the two small ships illustrated in Fig. 8. (Example 2)

Fig. 10 illustrates an example of a conceptual diagram at a time when one small ship is detected by a radar of each of the other two small ships after a predetermined period of time has elapsed from the condition illustrated in Fig. 8. (Example 2)

Fig. 11 illustrates an example of a conceptual diagram of detected result by a radar of each of the two small ships illustrated in Fig. 10, dividing detected results according to (A) and (B). (Example 2)

FIG. 12 illustrates an example of a conceptual diagram at a time when one large ship O24 is detected by a radar of each of the other three small ships. (Example 3)

Fig. 13 illustrates examples of conceptual diagrams showing a case (A) where two small ships are detected by a radar from a ship and a case (B) where two small ships are not able to be distinguished due to a distance resolution of a radar. (Example 4)

Fig. 14 illustrates examples of conceptual diagrams showing a case (A) where an object may not be distinguished by a radar from a single vessel due to the minimum detection distance of a radar and a case (B) where an object may not be distinguished by a radar from a single vessel due to an effect of a large ship. (Example 5)

FIG. 15 illustrates an example of a conceptual diagram when two ships 061, 65 detect an object by radar; as a result, one is affected by a false image and the other is not affected by a false image. (Example 6)

Fig. 16 illustrates an example of a conceptual diagram of results of radar detection by the two ships 061, 65, dividing the results according to (A) and (B). (Example 6)

Fig. 17 illustrates an example of a conceptual diagram of a flow of a processing on the user terminal which may be used in the present navigation assistance system for a ship.

Fig. 18 illustrates an example of a conceptual diagram of a flow of a processing on the administrative server which may be used in the present navigation assistance system for a ship.

DETAILED DESCRIPTION OF THE INVENTION

Hereinafter, examples of the present invention will be described with reference to accompanying figures.

First Embodiment

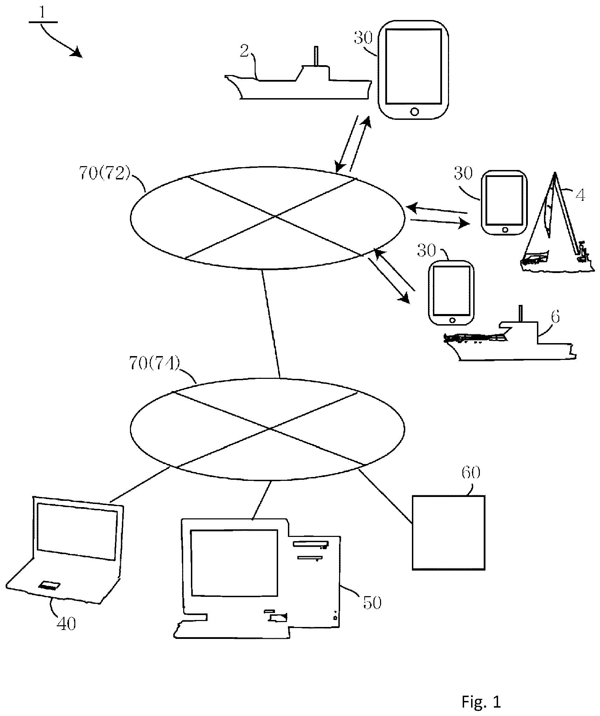

Fig. 1 illustrates an example of a conceptual diagram of a navigation assistance system for a ship according to the present invention.

The navigation assistance system 1 for a ship (or a ship navigation assistance system 1) is configured to connect user terminals 30 used in ships 2, 4 and 6 and an administrative server (platform) 50 via a network 70. In addition, the navigation assistance system 1 for a ship is configured to connect an administrative terminal 40 on the ground and the administrative server 50 via the network 70. Also, a communication among the user terminals 30, 30 is made possible

The ships 2, 4, and 6 as used herein means small ships or small marine vessels such as motorboats, yachts, water motorcycles or the like called pleasure boats or the like, used mainly by individuals for sports and leisure. Please notice that the navigation assistance system 1 for a ship is also applicable to larger ships. In each of the ships 2, 4, and 6, a user terminal 30 which has installed a program of the navigation assistance system 1 for a ship is made usable.

The user terminal 30 may be any device capable of having functions of a portable personal computer, such as a tablet, a smartphone or the like that is made usable by a user on each of the ship 2, 4, 6 or the like.

The administrative terminal 40 on the ground (or management terminal 40 on the ground) may be any device, such as a personal computer or the like that is made usable by any company on the ground. For example, the company on the ground may be a marine transportation company, a construction company, a leisure company or the like which may own small ships and/or ships for business, etc. The company on the ground may provide services using ships and perform operation control of ships by using the administrative terminal 40 on the ground, in conjunction with business management.

The administrative terminal 40 on the ground may be any device capable of having functions of a stationary personal computer or a portable personal computer, such as a conventional personal computer or a notebook personal computer that is made usable by a user on the ground.

The administrative server (or management server) 50 is configured to perform overall data management of the navigation assistance system 1 for a ship according to the present invention.

The administrative server 50 may be any device capable of having functions of a stationary personal computer or a portable personal computer, such as a conventional personal computer or a notebook personal computer that is made usable by a user on the ground. The administrative server 50 may also be implemented on a server on a cloud.

According to the navigation assistance system 1 for a ship, a communication at sea (please refer to reference number 70) is constructed between ships and land for navigating a ship. In addition, a communication at sea is able to be constructed among ships.

For example, it is possible to use communication means of the user terminal 30 for transmitting and/or receiving data to/from the administrative server 50, the administrative terminal 40 on the ground, or another user terminal 30 by using data communication (please refer to reference number 72) based on portable telephone communication (i.e. data communication by using a SIM (Subscriber Identity Module) card). It is possible to connect the user terminal to Wi-Fi (registered trademark) on the ship in order to communicate with the administrative server 50 via Wi-Fi. The inboard Wi-Fi may be connected to a network on the ground by using satellite communication or the like. The data communication (please refer to reference number 74) between the administrative terminal 40 on the ground and the administrative server 50 may be constructed based on a wireless network or a wired network. Each of the terminals 30, 40 is able to transmit/receive information to/from the administrative server 50 via the network 70 (please refer to reference numbers 72, 74).

It is possible to connect the network 70 to AIS system (Automatic Identification System) 60. The AIS system 60 is configured to transmit individual information such as an identification code, a name of the own ship, a position, a course, a speed, a destination and the like from the AIS device mounted on the ship by wireless communication based on VHF radio wave so as to be received by another ship proceeding in a vicinity or by a maritime traffic center on the ground.

In addition, it is possible to connect the network 70 to GPS (Global Positioning System), an anemometer, a wind direction/wind speed monitoring device, an international VHF (Very High Frequency) wireless system or the like.

According to the navigation assistance system for a ship, it is possible to realize functions of main electronic equipment of conventional small ships on the cloud by using IoT and/or AI. In addition, it is possible to realize real-time sharing of information on all ships, weather, peripheral information or the like via the Internet. By displaying the above-mentioned information on tablets and/or smartphones, it becomes possible to solve problems that have been barriers to the installation of electronic equipment by individuals until now, such as a cost of installing, maintaining and updating of electronic equipment, a temporal cost for acquiring or applying a license, a cost of learning operations, a cost of charged training or the like. Therefore, it becomes possible to play or work at the ocean safely and comfortably.

The terminals 30 and 40 and the administrative server 50 for use in the navigation assistance system for a ship are not limited to the above-mentioned examples. For example, it is possible to use a portable terminal such as a smartphone, a tablet, a mobile phone, a portable information terminal (PDA) or the like, a wearable terminal such as a glasses-like device, a wristwatch-like device, a clothing-like device or the like, a stationary computer or a portable notebook computer, a server on a cloud or a network, or even a combination of any one of these terminals. For example, a combination of one smartphone and one wearable terminal may logically function as one terminal. In addition, it is possible to use another information processing terminal other than these.

Each of the terminals 30, 40 and the administrative server 50 for use in the navigation assistance system for a ship may include a processor for executing an operating system, an application, a program or the like; a main storage device such as a RAM (Random Access Memory) or the like; an auxiliary storage device such as an IC card, a hard disk drive, an SSD (Solid State Drive), a flash memory or the like; a communication control unit such as a network card, a wireless communication module, a mobile communication module or the like; an input device such as a touch panel, a keyboard, a mouse, a voice input, an input device based on motion detection by imaging of a camera unit or the like; and an output device such as a monitor, a display or the like. The output device may be any device or terminal for transmitting information to output on an external monitor, a display, a printer, a device or the like.

Various programs and/or applications (modules) are stored in the main memory, and each functional element of the entire system is realized by the processor which is configured to execute the programs and/or applications. Each of these modules may be implemented in hardware by integrating or the like. Each module may be an independent program or application, or each module may be implemented in a form of a single integrated program or any sub-program or function of the application.

In this specification, each module is described as a subject that performs a processing, but practically, a processor which is configured to process various programs, applications or the like (for example, modules) can perform the processing.

Various databases (DB) are stored in the auxiliary storage device. Here, a "database" as used herein means a functional element (storage unit) that is able to store a data set to accommodate any data manipulation (e.g., extraction, addition, deletion, overwriting of data) by a processor or an external computer. The method of implementing the database is not limited particularly. For example, it is possible to use a database management system, a spreadsheet software, or a text file such as XML, JSON or the like.

"Device for Detecting a Target"

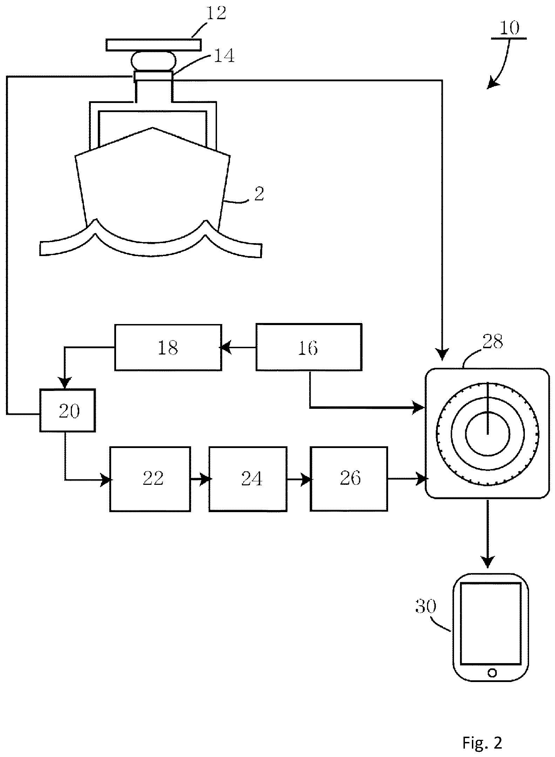

Fig. 2 illustrates an example of a conceptual diagram of a circuit configuration of a target detecting device (or a device for detecting a target) 10 according to the present invention.

Referring to FIG. 2, an example of a target detecting device 10 which is able to be mounted on each ship 2, 4, 6 is illustrated. A variety of target detecting devices may be mounted on ships in order to support navigating a ship. For example, the target detecting device 10 may be a radar 10. Alternatively, the target detecting device 10 may a camera or a lidar capable of acquiring images of a target (or an object).

Normally, an antenna unit 12 of a radar 10 is mounted near a top of a mast of a ship 2. The antenna unit 12 has a blade portion for firing a radio wave (microwave). The blade portion is able to be rotated 360 degrees by a motor unit 14 which is arranged below the blade portion. A slot (radiation unit) is provided in the antenna unit 12 in order to emit a microwave.

According to a circuit configuration of a normal radar 10, a pulse voltage is created in a modulation unit 16 in order to control a magnetron 18 by the pulse voltage. The magnetron 18 is configured to generate a pulsed signal of microwave. When a transmission/reception switching unit 20 is switched to a transmission mode, a microwave is able to be guided through a waveguide to the antenna unit 12. Then the microwave is fired from the slot of the antenna unit 12. The microwave emitted from the antenna unit travels over a sea surface, and when it hits a target such as another ship or the like, it is supposed to be reflected back to the original antenna unit 12. The reflected signal from the target is caught by the antenna unit 12. When the transmission/reception switching unit 20 is switched to a reception mode, the reflected signal is able to be sent to an instruction unit 28 after passing through a frequency converting unit 22, a wave detecting circuit 24, a video amplifier 26 or the like. The instruction unit 28 is configured to store an image by using a drawing circuit or the like and to display a radar image on a radar screen.

The transmitted signal which is emitted from the radar is a pulse wave. The pulse wave is repeatedly fired. A pulse width or a transmission time of the signal is selected according to a distance to be detected. In a case of a short distance detection, short, sharp pulses are emitted, and in a case of a long distance detection, long, powerful pulses are emitted. Generally, in a case of a small radar, the pulse width is able to be changed in about three stages.

The number of transmitted pulse signals emitted per one second may be called as a pulse repetition frequency. The pulse repetition frequency of the radar is determined based on the distance to be detected and the pulse width to be used. When detecting on a sea near the own ship, the pulse repetition frequency becomes higher. On the other hand, when detecting a far distance, the pulse repetition frequency becomes lower because it takes more time to round-trip radio waves.

Referring to FIG. 2, a radar image is displayed on the instruction unit 28 in PPI (Plan Position Indicator Scope) method or a plane-position displaying method. According to that screen, it is possible to take a view of 360 degrees around a position of the own ship. Generally, the instruction unit 28 is mounted in a bridge of the own ship 2. A processor unit for amplifying and processing images, a liquid crystal display unit, a power supply unit, an operation unit and the like are incorporated in the instruction unit 28. The instruction unit 28 is wired with a battery which is mounted in a ship so that a power is able to be supplied to the instruction unit 28 by the wiring. The antenna unit 12 and the instruction unit 28 are connected by an antenna cable, and a power is able to be supplied to the antenna unit 12 by the antenna cable. Furthermore, the instruction unit 28 is configured to be connected with any device for obtaining a signal of true azimuth (direction) such as an azimuth sensor, a gyrocompass or the like.

Information of detection (or detected results) of the radar 10, in other words information (signal) of targets around the own ship detected by the radar 10, is able to be displayed as a radar image on a screen of the instruction unit 28. The radar 10 has a built-in target tracking function, which automatically tracks isolated targets in the radar image in order to obtain target information (also called TT information) on a position (relative distance, direction) and a speed (course, velocity), etc. of the target.

By using the target information which can be outputted by the radar 10, it becomes possible to detect a relative distance from the own ship to the target, a direction from the own ship to the target, a time when the target is detected, a speed of the target or the like. A target number (or a serial number of target) may be automatically assigned to each of targets detected by the radar 10 sequentially. The target information may be updated at every rotation of the antenna unit 12 by the motor unit 14 (for example, about 3 seconds).

"Flow of Navigation Assistance system 1 for a Ship"

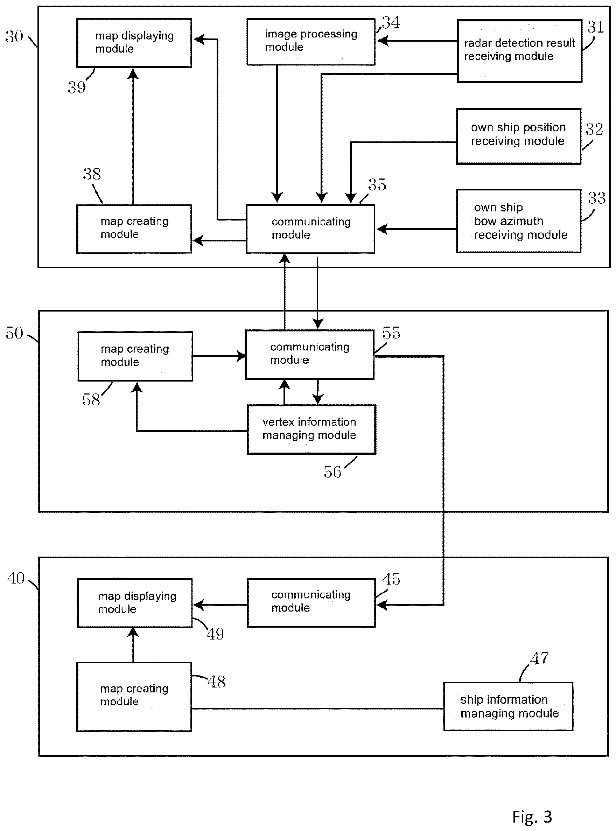

Fig. 3 illustrates an example of a conceptual diagram to show a flow of data among the user terminal 30, the administrative server 50, and the administrative terminal 40 on the ground.

The user terminal 30 is configured to be connected to the instruction unit 28 of the radar 10 (please refer to FIG. 2), thus it is possible to obtain information on detection of the target (target information and radar image information) by a radar detection result receiving module 31 (or module 31 for receiving results of radar detection). The information received by the radar detection result receiving module 31 may be stored in the user terminal 30 together with the time at that time.

The user terminal 30 is configured to include an external device, an internal device, a program or the like for obtaining a signal of true azimuth, such as an azimuth sensor, a gyrocompass or the like. The user terminal 30 is configured to obtain position information (for example, a latitude and a longitude) and azimuth information of the own ship by using an own ship position receiving module 32 (or module 32 for receiving a position of a ship itself) and an own ship bow azimuth receiving module 33 (or module 33 for receiving a bow azimuth of a ship itself). Please notice that there are two types of heading, one is based on the true north azimuth (true north direction) and the other is based on a proceeding direction of the own ship (bow direction), and both types can be used in the present system. The information received by the own ship position receiving module 32 and the own ship bow azimuth receiving module 33 may be stored in the user terminal 30 together with the time at that time.

The user terminal 30 may further include an image processing module 34. In this case the image processing module 34 (or module 34 for processing image) is able to perform image processing to extract a plurality of vertices (or a vertex) of a target so as to obtain position information of the vertices (or a vertex), with respect to the information on detection (in particular, a radar image) of a target obtained from the radar detection result receiving module 31. In addition, the user terminal 30 may determine a moving speed and a moving direction for each vertex by calculation.

The user terminal 30 includes a communicating module 35 (or communication means 35) so as to be connected to the communicating module 55 of the administrative server 50 via the network 70 illustrated in FIG. 1. Therefore, it is possible to sequentially upload the information of detected results of the radar, the own ship position information and the own ship heading information acquired by the user terminal 30, as well as the information (in particular, a latitude, a longitude, a speed, a course or the like) of a plurality of vertices of a target which is processed by the user terminal 30 to the administrative server 50.

The administrative server 50 includes a vertex information managing module 56 (or vertex information management means 56) to store the above-mentioned information received from the user terminal 30. In addition, the vertex information managing module 56 is able to identify vertices which move as a group as belonging to a common object from among a plurality of vertices based on the stored information. At this time, the vertex information managing module 56 is able to assign a common object ID (or object identifying information) to the set of vertices which are determined as belonging to a common object (or a same object) and to open the assigned object ID on the administrative server 50.

The administrative server 50 is configured to totally manage information on charts in each area registered in advance. Various figures such as a coast, an inland sea, a port, an anchorage, a land and the like are registered in advance in the chart. The administrative server 50 includes a map creating module 58 so as to invoke any map for use. For example, a peripheral map may be optionally selected within a predetermined range based on a latitude and a longitude of a ship obtained from the user terminal 30. A target object may be displayed on the selected map based on the object ID obtained from the vertex information managing module 56.

The administrative server 50 is able to transmit the map information created by the map creating module 58 to the user terminal 30 and the administrative terminal 40 on the ground. The map information includes at least information of the vertices which are identified as belonging to a common object. Therefore, by using the information, it becomes possible to plot or depict an outline of a contour of a target (or a rough contour of a target) on the map, for example, by connecting each vertex which has the common object ID. Furthermore, the map information may include map information around the object ID.

Alternatively, the user terminal 30 may be configured to include a map creating module 58 so as to invoke any map to use. For example, it is possible to optionally select a peripheral map within a predetermined range based on a latitude and a longitude of a ship obtained from the user terminal 30. For example, information of a chart of each region is registered in advance. The charts may include various figures such as a coast, an inland sea, a port, an anchorage, a land and the like. Furthermore, it is possible to plot an outline of a contour of a target on the selected map based on the object ID obtained from the vertex information managing module 56.

The user terminal 30 may include a map displaying module 39 so as to display a map created by the map creating modules 38, 58 on a display or a screen. This map may be updated as appropriate based on the map creating modules 38, 58.

Similarly, the administrative terminal 40 on the ground may be configured to include a map creation module 48 to invoke any map for use. For example, a peripheral map may be optionally selected within a predetermined range based on a latitude and a longitude of a ship obtained from the user terminal 30. For example, information of a chart of each region is registered in advance. The charts may include various figures such as a coast, an inland sea, a port, an anchorage and a land. Furthermore, it is possible to plot an outline of a contour of a target on the selected map based on the object ID obtained from the vertex information managing module 56.

The administrative terminal 40 on the ground may be configured to include a map displaying module 49 for displaying a map created by the map creating modules 48, 58 on a display or a screen. This map may be updated as appropriate based on the map creating modules 48, 58.

In addition, the administrative terminal 40 on the ground may be configured to include a ship information managing module 47 so as to totally control information such as a name, a size, and a shape of each ship registered in advance. Information such as ships or the like obtained from the ship information managing module 47 may be sent to the map creating modules 48, 58 as appropriate to display the information on the map.

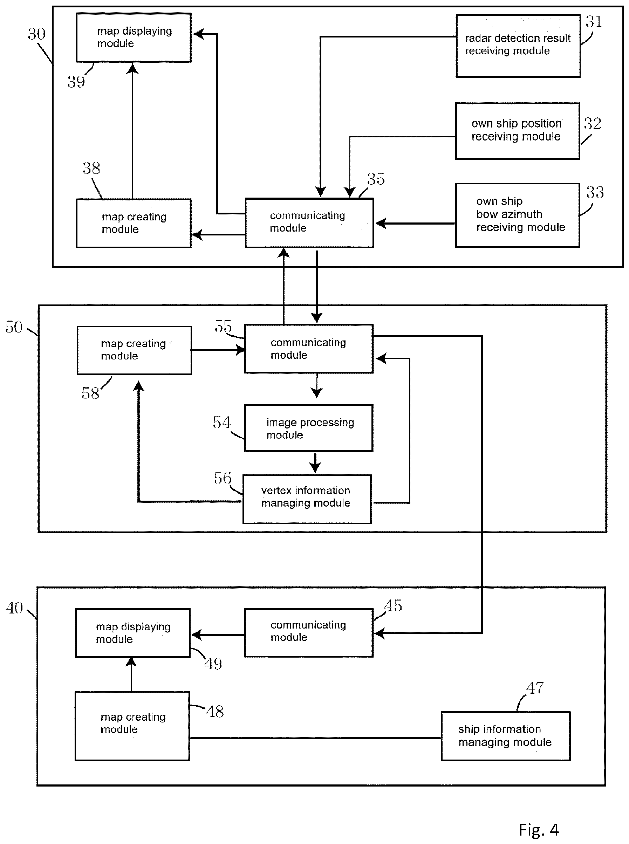

Fig. 4 illustrates a modified example of the conceptual diagram to show the flow of data among the user terminal 30, the administrative server 50, and the administrative terminal 40 on the ground illustrated in Fig. 3.

In the configuration illustrated in FIG. 3, the user terminal 30 is able to perform image processing to extract a plurality of vertices of a target based on information on detection of the target (particularly, a radar image) in the image processing module 34 of the user terminal 30 side.

In the configuration illustrated in FIG. 4, the user terminal 30 is configured to transmit various information obtained from the radar detection result receiving module 31, the own ship position receiving module 32, and the own ship bow azimuth receiving module 33 to the administrative server 50 via the communicating module 35.

The administrative server 50 is configured to include an image processing module 54 so as to perform image processing to extract a plurality of vertices of a target based on the information on detection of the target (in particular, a radar image) transmitted from the user terminal 30.

The image processing module 34 of the user terminal 30 and the image processing module 54 of the administrative server 50 may be configured substantially identical to each other, and other configurations may be the same as those illustrated in FIG. 3, so further description of FIG. 4 will be omitted.

"Image Processing Modules 34, 54"

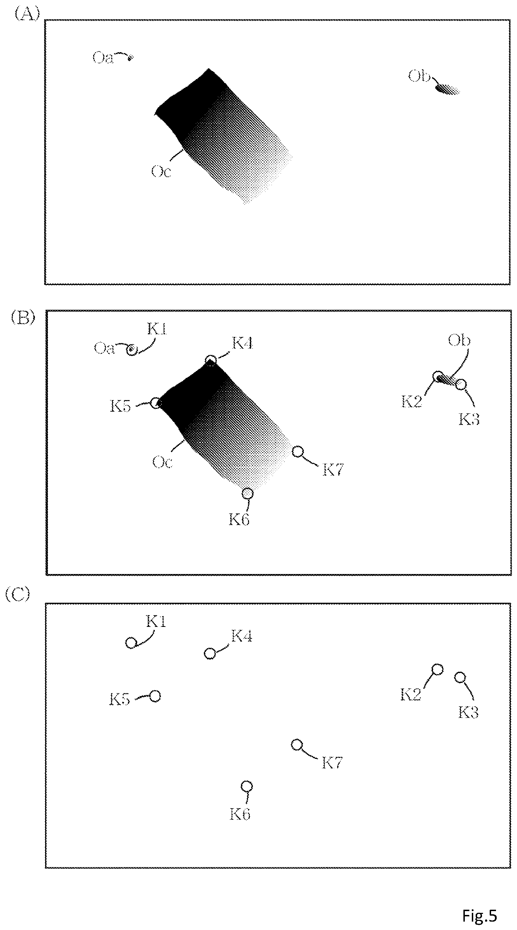

Fig. 5 illustrates an example of a conceptual diagram of tasks which are performed in the image processing modules 34, 54, dividing tasks according to (A), (B) and (C).

Referring to FIG. 5 (A), a conceptual diagram of a radar image obtained from the radar 10 is illustrated. It is illustrated that the radar image includes three targets Oa, Ob and Oc. The radar may not necessarily be able to accurately display external shapes of targets Oa, Ob and Oc depending on the performance of the radar, surrounding conditions of the radar, or the like,

For example, especially in a case of a small ship, the ship is susceptible to environmental changes in ocean currents due to features of a hull of the ship, resulting in shaking in a vertical direction and/or in a horizontal direction. In addition, for example, shaking in a vertical direction and/or in a horizontal direction may occur on a hull of the ship under influence of sea-level shaking due to climatic conditions or the like. Therefore, when a radar image obtained from the radar 10 is displayed as it is, there may be a case that the image is blurred.

Referring to Fig. 5 (B), it is exemplified that a plurality of vertices K1-K7 are extracted as a result of image processing performed by the image processing module 34 of the user terminal 30 or the image processing module 54 of the administrative server 50 with regards to the three targets Oa, Ob and Oc on the radar image illustrated in Fig. 5 (A).

Here, the "vertex (vertices)" as used herein means a characteristic point(s), such as a point on an outer edge of a target displayed on a radar image. For example, in a case that a portion of an outer edge extending in one direction changes its orientation in another direction, that point (or bend point) may be extracted as a vertex. Alternatively, in a case that an outer edge extends linearly, both ends of the outer edges (or end point) may be extracted as vertices. Preferably, a vertex corresponds to a corner or an end of an outer edge of a target. Alternatively, in a case that a target exists in a dotted state, a vertex may be extracted as one point.

It is not possible to display a contour of a target in detail on the radar image, but it is possible to display a characteristic vertex on the radar image.

For example, in a case that a target is a particularly small object (for example, a buoy), a target Oa may be depicted as a narrow range that does not move in the radar image. In such a case, it is possible to obtain one vertex K1, for example, at a center of the target Oa. Alternatively, it is possible to obtain a vertex K1 at an intersection point between a middle of a length in X-axis direction and a middle of a length in Y-axis direction of the image of Oa. Alternatively, it is possible to obtain a vertex K1 at a center of gravity of the image of Oa.

In addition, in a case that a target is a small ship such as a pleasure boat or the like, the two vertices K2 and K3 may be obtained at both ends of the target Ob which may be displayed as a bar shape on the radar image. The two vertices K2 and K3 may correspond to a bow position and a stern position of the target Ob.

In addition, in a case that the target is a large ship such as a barge ship or the like, four vertices K4, K5, K6 and K7 may be obtained at four corners of the target Oc. The four vertices K4, K5, K6 and K7 may correspond to four corners at a bow side and a stern side, and each of the bow side and the stern side has a width direction.

Further, it is possible to obtain three, five or more vertices of a target depending on the external shape of the target.

With referring to FIG. 5 (C), only the calculated vertices K1-K7 are illustrated as a result of the image processing on the radar image exemplified in FIG. 5 (B).

For example, the image processing may include the following steps. The user terminal 30 or the administrative server 50 is able to receive a radar image as a "pixelated image." The "pixelated image" as used herein means an image including either a plurality of pixels (or patches) or a plurality of groups of pixels (or groups of patches).

In operation, the image processing module 34 of the user terminal 30 or the image processing module 54 of the administrative server 50 is able to perform image processing on the captured "pixelated image(s)" responsive to a triggering signal.

For example, the radar image exemplified in FIG. 5 (A) is segmented ("divided") into a plurality of pixels or a plurality of groups of pixels for classifying the image on every pixel or every group of pixels (for example, an image is classified into sea and objects). It is possible to perform an analysis of color (hue, intensity and/or brightness) on every pixel or every group of pixels. Also, it is possible to discriminate a contour of the target graphically on every target.

The image processing modules 34, 54 may be configured to perform a training of the image processing on different types of radar images in advance. The training is performed, for example, on images of hundreds, thousands, or more different targets to accumulate various results. At that time, the image processing may be performed considering various situations, for example, an image showing only a sea surface, an image showing a sea surface and a small ship, an image showing a sea surface and two small ships, and the like. Then, a statistical data may be calculated and generated for the results of the accumulation.

After a high discrimination rate, e.g., a discrimination rate of about 99%, is obtained by the training, it becomes possible to actually perform the radar image processing to identify and extract a vertex (vertices) of a target(s) from pixelated image(s).

The above-mentioned training may also be carried out by a machine learning by using AI. A plurality of radar images and vertex information of targets may be used as teacher data. Then, a decision model may be generated by a machine learning in which an input is made to be radar images and an output is made to be vertex information of a target. By inputting a new radar image into the decision model, the vertex information of target may be obtained as an output.

The vertex information of a target (or information of vertex with regards to a target) may have at least "coordinate information" of a vertex and "date and time information" when a radar image is created (or the time when the vertex information is calculated by performing data complement or the like before and/or after a predetermined time, for example, a few seconds). In addition, the vertex information of a target may have further information such as radar identification information, user terminal identification information, a speed, an azimuth, a movement vector or the like.

"Vertex Information Managing Module 56"

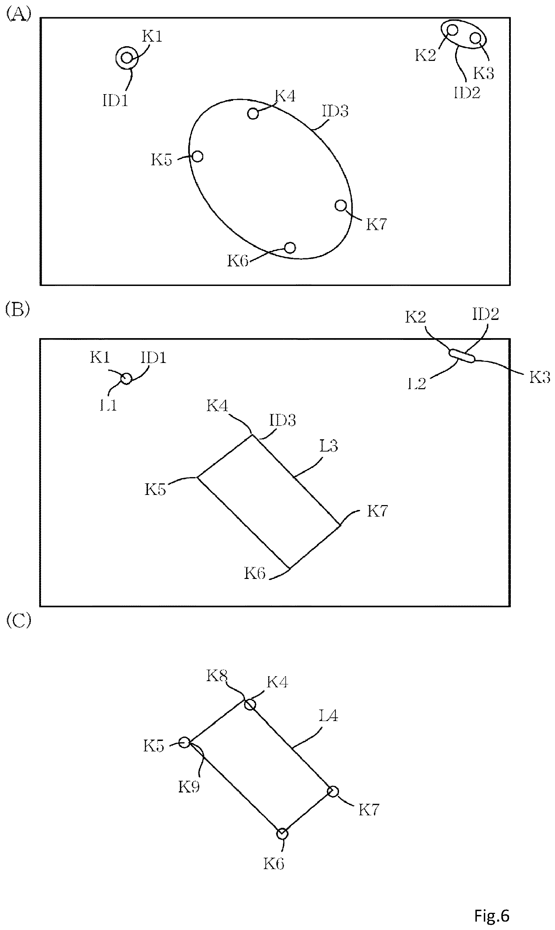

Fig. 6 illustrates an example of a conceptual diagram of tasks which are performed in the vertex information managing module 56, dividing tasks according to (A), (B) and (C).

The vertex information managing module 56 of the administrative server 50 is configured to store information of a plurality of vertices K1-K7 (please refer to FIG. 5 (C)) which are extracted by the image processing modules 34, 54. Preferably, each time the target detecting device (for example, radar) 10 updates the detection of the target (for example, every 3 seconds), the image processing is repeated, and each time the vertex information managing module 56 accumulates the information of vertex (i.e. the vertex information). Accordingly, temporal changes in the positional coordinates of extracted vertices K1-K7 are able to be monitored and recorded by the vertex information managing module 56 on the server 50. The vertex information managing module 56 is configured to perform partitioning (or classifying) of a plurality of vertices K1-K7 by tracking information (particularly a latitude and a longitude) of each extracted vertex.

Figure 6 (A) illustrates a state of the vertices after a certain time has elapsed from the state of FIG. 5 (C). The vertex information managing module 56 is able to compare information of coordinates of the vertices of FIG. 6 (A) and that of FIG. 5 (C). For example, the vertex information managing module 56 is able to identify that one vertex K1 does not change its positional coordinate while other two vertices K2 and K3 change their positional coordinates in the same direction at the same speed among a plurality of vertex K1-K7. Also, the vertex information managing module 56 is able to identify that four vertices K4-K7 change their positional coordinates simultaneously in different direction at different speed comparing to the other vertices K2 and K3. In this case, the vertex information managing module 56 may classify a plurality of vertex K1-K7 into small groups (subgroups) of "K1", "K2 and K3", and "K4-K7"

Referring to FIG. 6 (A), the vertex information managing module 56 is able to assign different object IDs (or object identifying information) for each classified small groups. For example, an object ID1 is assigned to the vertices K1, an object ID2 is assigned to the vertices K2 and K3 in common, and an object ID3 is assigned to the vertices K4-K7 in common.

The vertex information managing module 56 is able to accumulate and track information for all extracted vertices, and as a result, the vertex information managing module 56 is able to perform an operation to identify whether one vertex or more vertices are moving in a group or not. Preferably, this operation is repeated each time the target detecting device (for example, radar) 10 updates the detection of the target (for example, every 3 seconds). As a result, a weighting may be applied to the assigned object IDs. For example, a reliability may be different among a case in which only one object ID is assigned, a case in which an object ID is assigned 10 times consecutively, and a case in which an object ID is assigned 100 times consecutively.

Furthermore, it is also possible to assign a new object ID to the object ID which has been assigned once (for example, when one group identified as one object is divided into two small groups). Furthermore, it is also possible to perform cancellation for the object ID which has been assigned once (or example, when one group identified as one object is determined as a false image).

The "one vertex or more vertices moving in a group" as used herein means that, by integrating information about each moving vertex, it is determined that a set of vertices maintain a relative positional relation at a close distance. In such a case, one object ID may be assigned to each set of vertices.

For example, in a case that only one vertex (e.g., K1) is observed to make its positional coordinate, moving direction (azimuth), moving speed or the like different from its surrounding other vertices, only one object ID (e.g., ID1) may be assigned for that one vertex. For example, in a case that a buoy (drift type or mooring type) may exist on or in a sea, the buoy may be included in a radar image by representing its predetermined size and shape on the sea surface. When only one object ID is assigned to one vertex, for example, it may be performed within a scope of a size of a buoy.

Also, in a case that two vertices (e.g., K2 and K3) are observed to make their positional coordinates, moving directions, moving speeds or the like different from their surrounding other vertices, only one object ID (e.g., ID2) may be assigned for the two vertices in common. In this case, a distance between the two vertices may be tracked. In a case that the distance between the two vertices is kept constant, it may be assumed that the two vertices belong to a common object. When one object ID is assigned to the two vertices, for example, it may be performed within a scope of a size of a small ship (in particular, within a length between a bow and a stern of a small ship).

Please notice that the present invention is not limited to the manner of classification described above. For example, it is possible to assign one vertex or two vertices in consideration of sizes of various small ships. For example, only one vertex may be assigned for a water motorcycle having a size of 4m or less in length, and two vertices may be assigned for a yacht having a size of 6m or more in length. In the former case, if the size of one detected point is maintained within a range of permissible error of about plus or minus 1 m-0.5m with a maximum length of about 5m, it may be assumed that one vertex is moving in a group. In the latter case, if the detected distance between two points is maintained within a range of permissible error of about plus and minus 1-2m with a maximum length of about 10m, it may be assumed that the two vertices are moving in a group. Please notice that it is possible to use another classification method.

In addition, in a case that four vertices (e.g., K4, K5, K6 and K7) make their positional coordinates, moving directions, moving speeds or the like different from their surrounding other vertices, only one object ID (e.g., ID3) may be assigned for the four vertices in common. At this time, a distance between the two adjacent vertices may be tracked. Also, at this time, an angle formed between two adjacent sides of a polygon having four sides (for example, square) may be tracked. Also, at this time, an area of a region surrounded by the four vertices may be tracked. If the distance, the angle or the area is kept constant, it becomes possible to assume that the four vertices belong to a common object. When one object ID is assigned for the four vertices, for example, it may be carried out in a scope of a size of a medium-sized ship (in particular, a length between a bow and a stern of a ship) or more of the scope. For example, if the detected maximum two-point distance is maintained within a range of permissible error of about plus or minus 2m with a minimum length of about 9m, it is possible to assume that the four vertices are moving in a group. Alternatively, in a case of a large ship, it is also possible to assume that the four vertices are moving in a group if the detected maximum distance between the two points is maintained within a range of permissible error of about plus or minus 3m with a maximum length of about 100m.

Therefore, the vertex information managing module 52 of the administrative server 50 is able to identify vertices moving in a group as belonging to a common object when at least one of, preferably two of, more preferably two or more of a group consisting of "a relative relationship of positional coordinates of a plurality of vertices", "a distance between a plurality of vertices", "an angle formed by a plurality of vertices," "an area of a region formed by a plurality of vertices" and "a movement vector of a plurality of vertices" may be kept within a predetermined range. In this case, it is possible to improve the accuracy of the identifying by combining further information such as a relative speed, an acceleration, a center position or the like of a plurality of vertices. In addition, it is possible to repeatedly perform this task to improve the accuracy of the identifying more.

The vertex information managing module 52 of the administrative server 50 is configured to transmit the object ID to the terminals 30, 40 so that an outline of a contour of the target is able to be depicted or plotted based on the object ID by connecting the vertices.

For example, with referring to FIG. 6 (B), for the one vertex K1 to which the object ID (ID1) is assigned, a small circle L1 is shown. In this case, the positional coordinate of the vertex K1 may correspond to a center of a small circle. When an object ID is assigned to a single vertex, its positional coordinate may be represented by a point. The point may have a radial size.

In addition, for the two vertices K2, K3 to which the object ID (ID2) is assigned, an elongated rod shape L2 is shown. In this case, the two positional coordinates of the vertices are connected. In this case, the respective positional coordinates may be connected by a straight line. The straight line may have a thickness or a width. In addition, both ends of the straight line may be rounded (by rounding processing).

Furthermore, for the four vertices K4-K7 to which the object ID (ID3) is assigned, a line L3 is shown by connecting the positional coordinates of them. The line L3 is depicted in a single-stroke fashion to connect points adjacent to each other (i.e. four successive points corresponding to four vertices K4-K7). That is, each vertex is connected by a line so that the outer edges of the polygon are connected continuously. The thickness of the straight line may be set variously.

In addition, in a case that a common object ID is assigned to three or five or more vertices, the outline of the contour is displayed by connecting these points of the polygon along the outer edges with a single stroke.

In conventional radar technology, it is known that a clear target image may not be necessarily obtained (please refer to Fig. 5(A)). According to the present invention, by displaying an outline of a contour of a target in a straight line based on vertices (vertex) of a target moving in a group, it becomes possible to obtain a clear target image (please refer to Fig. 6(B)).

With referring to FIG. 6 (C), another aspect of the invention is illustrated. It is known that the radar image does not necessarily display a contour of a target precisely. Thus, positional coordinates of vertices extracted from a radar image may include a shift as a result. For example, with referring to FIG. 6 (C), among the four vertices of K4-K7, the vertices K4 and K5 are illustrated to be slightly shifted in a front-rear direction and/or in a left-right direction compared to their actual positions K8 and K9.

According to the present invention, it is possible to perform a position adjustment of each vertex and connect adjusted positions K8, K9, K6, K7 by a straight line L4, instead of connecting the extracted positions K4, K5, K6, K7 by a straight line directly (without performing the position adjustment).

For example, it is possible to store a plurality of information about known ships in the administrative server 50 in advance. Then, it becomes possible to compare the extracted vertices and the stored information about known ships to obtain an approximation. In this case, the administrative server 50 may perform a training before performing an actual operation. The training may be performed, for example, on images of hundreds, thousands, or more different targets to accumulate various results. At that time, it is possible to perform a processing considering various situations. For example, it is possible to consider a shift between extracted positions and actual positions occurring in a front-rear direction and/or in a left-right direction (of a ship or the like), at a range of 0.1%, 1%, 2% or more. Then, a statistical data may be calculated and generated for the results of the accumulation. Assuming that a certain high success rate (discrimination rate), for example, a success rate of about 99% is obtained by the training, then, it becomes possible to identify a best fit among the pre-registered information about ship based on the actually extracted points (e.g., K4, K5, K6, K7) so as to connect the adjusted positions (e.g., K8, K9, K6, K7) in a straight line. Similarly, when radar images of the same target change minutely with the elapse of time, it is possible to cancel the minute changes at the time of extracting of vertices to maintain the relative positional relation of each vertex.

"Example of Map Display "

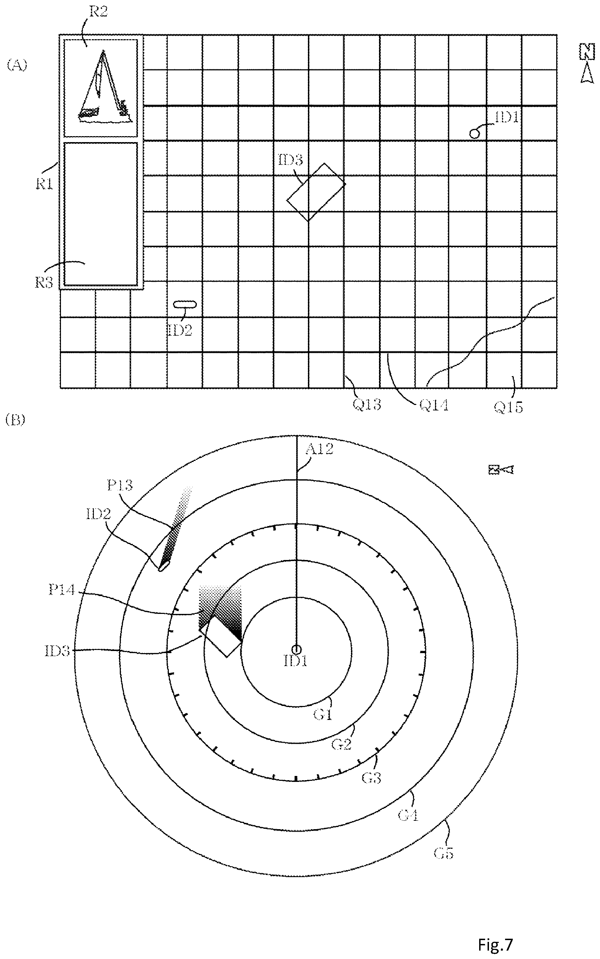

Fig. 7 illustrates examples of conceptual diagrams of maps which can be shown on a display of the terminal 30, 40, dividing maps according to (A) and (B).

Referring to FIG. 7 (A), an example of a map that may be displayed on a screen (or a display) of the user terminal 30 or the administrative terminal 40 on the ground is illustrated.

There are a plurality of vertices K1-K7 (please refer to FIG. 6 (A)). These vertices K1-K7 are discriminated and classified into different groups. In each group, vertices (vertex) moving in a group are determined as belonging to a common target. As a result, each of the three groups is represented as belonging to different object (please refer to ID1, ID2 and ID3).

The target to which the object ID1 is assigned is represented with a small circle. The target to which the object ID2 is assigned is represented with a bar shape. And, the target to which the object ID3 is assigned is represented with a rectangular shape. In the latter, four vertices are connected by one line.

It is possible to display corresponding chart information superimposedly at a time when each object is displayed. For example, as exemplified by reference number Q13, Q14, it is possible to display a chart so that a latitude and a longitude may be observed. Also, as exemplified by reference number Q15, it is possible to display a chart so that a nearby land (a coast or the like) may be observed. It is known that a coast or the like may change its contour in accordance with changes of a water level with the elapse of time. For this reason, it is possible to display a map at the reference time when displaying the coast or the like. Also, it is possible to display a map including a coast to accommodate changes in time or water level.

The administrative terminal 40 on the ground is also able to display a map on the screen. At a time when a small ship managed by a land company is displayed, it is possible to show a display area for ship (please refer to R1) on the screen in order to display detail information of the small ship based on information obtained from the ship information managing module 47. The display area for ship may show an image of a ship (please refer to R2) and its detailed information (please refer to R3). The above-mentioned information may be obtained from the ship information managing module 47 of the administrative terminal 40 on the ground. In addition, the administrative terminal 40 on the ground may display a list of ships currently managed by a land company (not shown).

At that time, a user may be allowed to input a name of an object to which an object ID is assigned. For example, a user may tap a rectangular object ID3 so as to display an input screen. Then, a user may be allowed to input a name of the ship (for example, Barge Vessel XXX, etc.).

Furthermore, in a case that the position information or the like of the ship has been obtained in advance, the name of the ship existing in the location of the position information may be displayed in association with the object ID.

Referring to FIG. 7 (B), another example of a map (radar image display) which can be displayed on a display of the user terminal 30 or the administrative terminal 40 on the ground is illustrated. In this case, the reference number ID1 represents a position of the own ship. Please notice that FIG. 7 (A) and FIG. 7 (B) shall not necessarily correspond exactly with each other.

In a case of the radar image display, the position ID1 of the own ship is displayed at a center of the screen, to move upward. Please notice that a line A12 extending directly above from the own ship position ID1 corresponds to a bow line and is fixed not to be moved. It is possible to display a speed vector (not shown) indicating a moving speed of the own ship on the same straight line as the bow line A12.

With referring to FIG. 7 (B), as shown in the reference number G1-G5, a plurality of concentric circles are displayed to be shown centering on the own ship position ID. These are fixed-distance rings which are displayed at every fixed distance. The fixed-distance rings are useful to quickly read an approximate distance to another ship ID2, ID3 or the like. Each of the fixed-distance rings displayed as multiple circles may optionally be turned on and off on a screen.

One of the fixed-distance rings, G3, has a 360-degree scale as a heading scale to be shown centering on the own ship position ID1. It is possible to use the heading scale to recognize a direction of a target (for example, another ship or the like) around the own ship ID1 located at a center of the screen.

Although it is not shown in the figure, it is possible to display variable distance rings (VRMs: Variable Range Makers) in addition to the fixed-distance rings. The variable distance rings may be freely enlarged and/or reduced on the screen. The variable distance rings may be used in order to measure more precise distance to the target.

Also, although it is not shown in the figure, it is possible to display an electronic cursor (EBIs: Electronic Bearing Line). The electronic cursor is a variable azimuth mark extending from the own ship position ID1 located at a center of the screen. The electronic cursor may be used in order to measure a direction of a target such as a ship or the like more accurately.

It is possible to measure a distance and/or a direction to a target such as another ship, island or the like by using VRM and/or EBI on the screen, as with the prior art. A detailed description thereof is omitted herein.

With referring to Fig. 7 (B), as a method of displaying, a heading-up (HU) display system centering on the own ship position ID1 is adapted. Please notice that it is possible to change the heading-up (HU) display system to the North-up (NU) display system. In addition, with referring to FIG. 7 (B), a moving state of each object is displayed in an echo trail manner (please refer to P13 and P14) by tracking positional coordinates of each vertex and by using past positional coordinates of each vertex. According to the echo trail, it is possible to display a shadow of a ship as a wake (or a track) when a ship is moving. By using the echo trail, it becomes possible to display a trajectory of each ship appearing on a screen. Thus, it becomes easy to understand a trend of each ship. Please notice that it is possible to switch the echo trail display system to display images as in a non-echo trail manner.

Second Embodiment

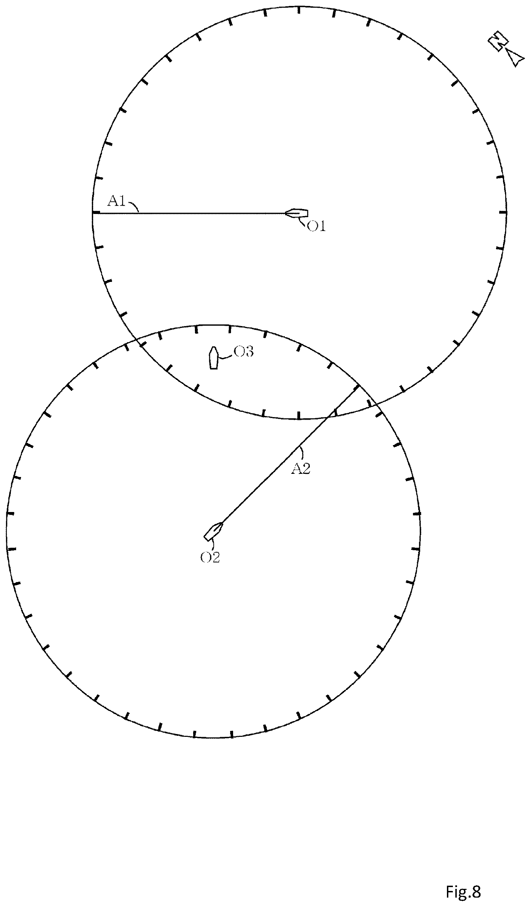

Fig. 8 illustrates an example of a conceptual diagram at a time when one small ship is detected by a radar of each of the other two small ships.

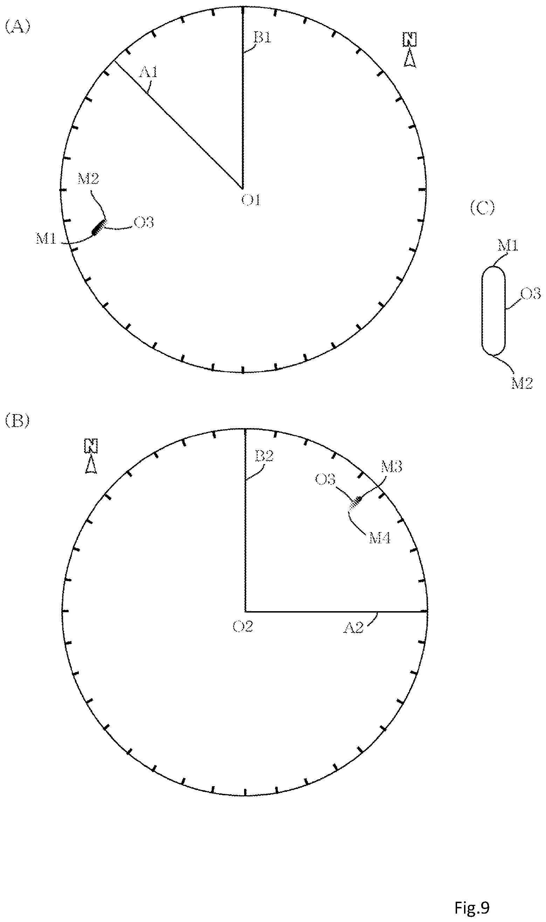

Fig. 9 illustrates examples of detected results from the two small ships illustrated in Fig. 8.

The above-mentioned first embodiment is explained based on image processing of a radar image which is obtained from a single radar 10. In the second embodiment, a case where a plurality of radars 10 are used will be explained.

Referring to Fig. 8, there are three small ships O1, O2 and O3 at sea. In this example, the small ship O3 in the center is stopped or anchored and a user terminal 30 according to the present invention is not provided therein. The small ship O1 positioned above is proceeding from right to left, as indicated by a bow line A1, and a user terminal 30 according to the present invention is provided therein. The small ship O2 positioned below is proceeding obliquely upward from the lower left to the upper right, as indicated by a bow line A2, and a user terminal 30 according to the present invention is provided therein. The small ships O1 and O2 are capable of detecting surrounding objects by using the radar 10, respectively. Thus, a small ship O3 in the center has become detectable by the other two small ships O1 and O2.

For example, each of the small ship 01-03 is a pleasure boat proceeding in a harbor or the like.

Referring to Fig. 9 (A), a detected result of the small ship O1 positioned above in Fig. 8 is performed with regards to the small ship O3 and it is shown schematically. The radar image is shown in a north-up display system, as indicated by a line B1 in the true north direction. The line A1 indicates a bow direction of the small ship O1. For ease of explanation, other information such as a land, other vessel O2 and the like are omitted in the figure.

Referring to Fig. 9 (B), similarly, a detected result of the small ship O2 illustrated below in Fig. 8 is performed with regards to the small ship O3 and it is shown schematically.

Each of the information of detected results obtained from a plurality of small ships O1, O2 is able to be transmitted to the administrative server 50 by clarifying a reference (true north direction or bow direction), respectively. Then, each position information is able to be tracked and compared, etc., under a unified standard by the vertex information managing module 56.

By performing image processing on the radar image of FIG. 9 (A), it becomes possible to obtain two vertices M 1 and M 2 corresponding to a bow position and a stern position of the target O3 (please refer to FIG. 5 (A)-(C)).

Referring to Fig. 9 (C), an outline of a contour of the target O3 is depicted based on the two extracted vertices M 1, M 2. For example, it is possible to connect the two vertices M 1 and M2 in a straight line with a predetermined width. In addition, it is possible to round a corner at each point. Alternatively, it is also possible to connect the two points M 1 and M2 in a straight line only.

Similarly, it is possible to obtain two vertices M 3 and M 4 corresponding to a bow position and a stern position of the target by performing image processing on the radar image with regards to the small ship O3, by using the radar of the small ship O2.

The user terminal 30 is configured to analyze the information of detected results, particularly the image information of the target on the radar image so as to calculate a positional coordinate, a movement vector, a movement speed and the like of the specified target based on the position information of the target at that time.

The calculated changes in positional coordinates of the target are able to be uploaded to the administrative server 50 in a format having a plurality of fields (items) such as, for example, a time (a time stamp), a terminal ID, a latitude, a longitude, a speed, an azimuth (a direction) and the like.

A unit of a numeric value to be transmitted may be identified on both of the transmitting side and the receiving side.

For example, a unit of velocity may be selected from any one of a group consisting of m/s, km/h, kn and the like.

Also, with regards to the azimuth, its reference (true north direction or bow direction) and unit (degree, Deg) may be made clear.

For example, it may be possible to send a vertex information as below. [M1,20191212090000,O1,35.55345117,139.24523411,1.32,278 · · · ]

This vertex information is configured as a sentence to include fields of a vertex ID (identification information of a ship which performs a radar detection, or identification information of a radar), a time (a time stamp), a terminal ID, a latitude, a longitude, a speed, and an azimuth (a direction), in order from the beginning. These fields are set apart by a comma for indication.

It is possible to upload this sentence from the terminal 30 to the administrative server 50 each time the detected result is updated.

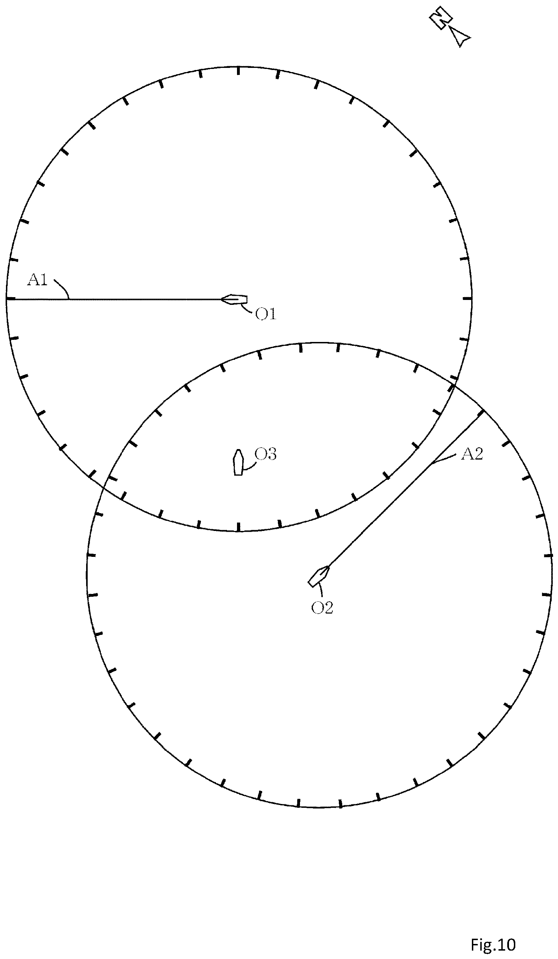

Fig. 10 illustrates an example of a conceptual diagram at a time when one small ship is detected by a radar of each of the other two small ships after a predetermined period of time has elapsed from the condition illustrated in Fig. 8.

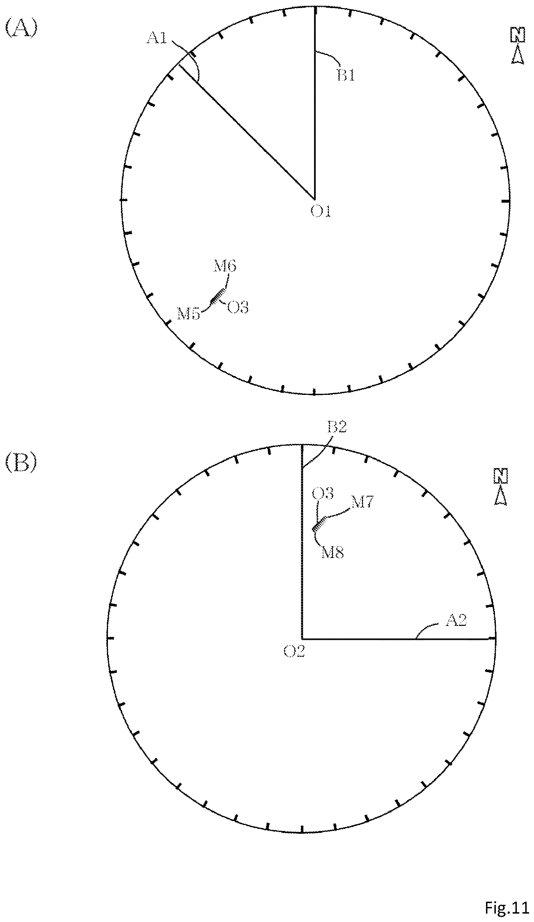

Fig. 11 illustrates an example of a conceptual diagram of detected result by a radar of each of the two small ships illustrated in Fig. 10, dividing detected results according to (A) and (B).

Referring to Fig. 10, a view of three small ship 01-03 illustrated in Fig. 8 after a predetermined period of time has elapsed is shown. The small ship O3 at a center is continuing to stop. The small ship O1 positioned above is proceeding further from right to left as indicated by the bow line A1. And the small ship O2 positioned below is proceeding further obliquely upward from the lower left to the upper right as indicated by the bow line A2. Similarly, each of the two small ships O1 and O2 at the upper side and the lower sides is able to detect the small ship O3 on the center by using the radar, respectively.

Referring to Fig. 11 (A), a detected result of the small ship O1 illustrated above in Fig. 10 is performed with regards to the small ship O3, and it is shown schematically. It is possible to obtain two vertices M5, M6 of the target by processing the radar image of the target

Referring to Fig. 11 (B), a detected result of the small ship O2 illustrated below in Fig. 10 is performed with regards to the small ship O3, and it is shown schematically. It is possible to obtain two vertices M7, M8 of the target by processing the radar image of the target

The administrative server 50 is configured to accumulate information received from the user terminal 30 of the small ship O1 and the user terminal 30 of the small ship O2 in the vertex information managing module 56 (please refer to FIGS. 3 and 4). At this time, it is possible to make the information into database for each predetermined item.

For example, firstly, the vertex information of vertices M1 and M2 may be obtained from the radar of the small ship O1.

The vertex information may include an identification number of each vertex, an identification number of a ship which performed the radar detection, a latitude, a longitude, a speed, an azimuth (a direction), and a time (a time stamp) of the vertex. The vertex information may be obtained by analyzing the radar image obtained from the radar 10 and/or by using a target tracking function provided in the radar 10.

Subsequently, the vertex information of vertices M3 and M4 may be obtained from the radar of the small ship O2 after a certain time has elapsed. Subsequently, the vertex information of vertices M5 and M6 may be obtained from the radar of the small ship O1 after a certain time has elapsed. Subsequently, the vertex information of vertices M7 and M8 may be obtained from the radar of the small ship O2 after a certain time has elapsed. Then, the administrative server 50 may accumulate these information in a database so as to search for a pair belonging to a common object for each vertex M1 to M8.

[Table 1]

| Time | Latitude | Longitude | T. ID | V. ID |
|---|---|---|---|---|
| 20191212090000 | 35.55345117 | 139.24523411 | O1 | M1 |
| 20191212090000 | 35.55395227 | 139.24528425 | O1 | M2 |
| 20191212090100 | 35.55345121 | 139.24523415 | O2 | M3 |
| 20191212090100 | 35.55395231 | 139.24523429 | O2 | M4 |
| 20191212090300 | 35.55345119 | 139.24523413 | O1 | M5 |

(continued)

| Time | Latitude | Longitude | T. ID | V. ID |
|---|---|---|---|---|
| 20191212090300 | 35.55395229 | 139.24528427 | O1 | M6 |
| 20191212090400 | 35.55345120 | 139.24523414 | O2 | M7 |
| 20191212090400 | 35.55395230 | 139.24523427 | O2 | M8 |
| ... | ... | ... | ... | ... |

Table 1 illustrates an example in which each vertex information obtained from the small ships O1 and O2 is accumulated in the vertex information managing module 56 of the administrative server 50 in a time-series manner.

The vertex information managing module 56 of the administrative server 50 is configured to have a database to totally manage the vertex information. The vertex information managing module 56 is able to search a set of vertices in accordance with various purposes from among a plurality of vertices on the database.

In Table 1, "time (detection time)", "latitude", "longitude", "T. ID or terminal ID (the number of ship)", and "V. ID or vertex ID (the number of vertex)" are illustrated. Please notice that other items such as a speed, an azimuth, a standard of the azimuth and the like may be similarly accumulated on the database.

For example, referring to vertex ID M1 in Table 1, a latitude (35.55345117) and a longitude (139.24523411) are exemplified for the vertex M1. These items may be obtained based on a radar detecting by the small ship O1 at 09:00:00 on December 12, 2019.

Similarly referring to vertex ID M 2, a latitude (35.55395227) and a longitude (139.24528425) are exemplified for the vertex 2. These items may be obtained based on a radar detecting by at the small ship O1 at 09:00:00 on December 12, 2019.

Based on them, it becomes possible to understand that the two vertices having different latitudes and longitudes are identified by the same radar at the same time. In this case, it is possible to compare the two latitudes and longitudes and determine whether these values are equal or not within a range of permissible error, for example, of about plus or minus 1m or 0.5m (for example, in Japan, a latitude per 1m is 0.000008983148616 and a longitude per 1m is 0.000010966382364). The values of latitude and longitude may be determined based on an area where the ship is located.

Next, referring to the vertex ID M5 in Table 1, a latitude (35.55345119) and a longitude (139.24523413) are exemplified for the vertex M5. These items may be obtained based on a radar detecting by the small ship O1 at 09:03:00 on December 12, 2019.

Similarly referring to the vertex ID M6, a latitude (35.55395229) and a longitude (139.24528427) are exemplified for the vertex M 6. These items may be obtained based on a radar detecting by the small ship O1 at 09:03:00 on December 12, 2019.

Based on them, it becomes possible to understand that the two vertices M5, M6 having different latitudes and longitudes are identified by the same radar at the same time, after the reception of M1 and M2 (for example, after 3 minutes).

In this case, when comparing the vertex M1 and the vertex M5, it can be seen that these values almost coincide with each other although these values are not completely equal. Similarly, when comparing the vertex M2 and the vertex M6, it can be seen that these values almost coincide with each other although these values are not completely equal.

For example, assuming that vertices M1 and M5 coincide in latitude and longitude, respectively, within a predetermined range, e.g., 99% and 99.9%, and, assuming that vertices M2 and M6 coincide in latitude and longitude, respectively, within a predetermined range, e.g., 99% and 99.9%, further, assuming that the speed of each vertex is zero at that time and these vertices do not move along a specific direction, then, the vertex information managing module 56 is able to determine that each vertex is not moved, and the vertex M1 and the vertex M5 coincide with each other, and the vertex M2 and the vertex M6 coincide with each other. As a result, the vertex information managing module 56 is able to determine that the vertex M1 and the vertex M2 (or the vertex M5 and the vertex M6) belong to a common object. By repeating this task, the vertex information managing module 56 is able to increase an accuracy of the determination for obtaining a set of vertices.

Therefore, the vertex information managing module 56 of the administrative server 50 is configured to obtain a set of vertices in accordance with various purposes for a plurality of vertices.

In addition, the vertex information managing module 56 is configured to store all the vertex information obtained from each ship in a database.

Further, the vertex information managing module 56 is configured to search a set of vertices (for example, a set of both ends of a bow and a stern of a small ship) which keep a relative positional relation within a short distance (for example, at least within a few meters in consideration of a length or the like of a small ship) among a plurality of vertex information obtained by the radar 10 of the same ship.

At this time, the vertex information managing module 56 is able to exclude a known combination from among searched vertex information to eliminate unnecessary work. For example, with referring to FIG. 8, the small ship O1 is able to perform radar detection about two targets O2, O3. As a result, vertices are obtained for each of them. In this case, the ship information, etc., of O2 has been registered in advance in the administrative server 50. Therefore, it is possible to obtain the position information of O2 (a time, a latitude, a longitude, a speed, an azimuth, etc.) separately. Thus, the vertex information managing module 56 is able to exclude a part pertinent to the vertex information of O2 (a comparison of a time, a latitude, a longitude, a speed, an azimuth, etc.) as an object to be worked from among the vertex information of O2 and O3 obtained from O1.

For example, with referring to Table 1, only the vertex information (M1, M2, M5, M6) of O3 out of a plurality of vertex information of O2 and O3 obtained from O1 is shown.

Subsequently, the vertex information managing module 56 is able to obtain coordinates of vertices to be worked for a plurality of times in a record, at each time uploaded from the terminal 30 (please refer to Table 1).

Please notice that all of a contour of a target may not be displayed on a radar image. For example, when a target enters behind a large ship, the target may disappear from a detection range of a radar. Even in such a case, it is possible to obtain the vertex information after a predetermined time has elapsed, by performing a calculation based on the known information. For example, in a case that positional coordinates, speeds, and directions of a target are known at some discrete successive time points, it becomes possible to calculate positional coordinates of the target in past/future, by performing extrapolation processing. At that time, it is possible to calculate positions in past/future based on the time immediately after and/or before, the coordinates, the averaged speed and the course, considering the speed and the acceleration, etc., of the target.

Likewise, in a case that positional coordinates, speeds, and directions of a target are known at some discrete successive time points, it becomes possible to calculate positional coordinates of the target at arbitrary intermediate points, by performing interpolation processing. At that time, it is possible to calculate positions at arbitrary intermediate points based on the time immediately after and/or before, the coordinates, the averaged speed and the course, considering the speed and the acceleration, etc., of the target.

The vertex information managing module 56 of the administrative server 50 is configured to store a plurality of vertex information so as to be able to predict a future trend and/or a past trend of a target. For example, assuming that positional coordinates of a certain vertex are obtained at 9:10:00 and 9:13:00. Then, it becomes possible to predict positional coordinates at 9:11:00 by performing interpolation processing based on the known values. Also, it becomes possible to predict positional coordinates at 9:15:00 by performing extrapolation processing based on the known values. Therefore, the vertex information managing module 56 is able to predict positional coordinates of vertices based on the accumulated information obtained by tracking vertices of the target for a predetermined time, even if the radar detection is not necessarily performed.

Furthermore, the vertex information managing module 56 is able to determine whether each vertex is belonging to a common target or not, by considering a distance between the two vertices.

For example, the vertex information managing module 56 is able to obtain a distance L11 between two vertices M1 and M2 at a certain time (for example, please refer to 09:00:00 on December 12, 2019 in Table 1) which are obtained from O1. The value of L11 may be obtained from the positional coordinates (for example, please refer to a latitude and a longitude in Table 1) based on the Pythagorean theorem. Assuming that a latitude and a longitude of M1 are X1 and Y1, and a latitude and a longitude of M2 are X2 and Y2, then, a distance L11 between the two points is able to be calculated from a square root of a sum of "a square of (X1-X2) and a square of (Y1-Y2)".

In like manner, the vertex information managing module 56 is able to obtain a distance L12 between two vertices M5 and M6 at a certain time after a predetermined time elapsed (for example, please refer to 09:03:00 on December 12, 2019 in Table 1) which are obtained from O1. Assuming that a latitude and a longitude of M1 are X5 and Y5, and a latitude and a longitude of M2 are X6 and Y6, then, a distance L12 between the two points is able to be calculated from a square root of a sum of "a square of (X5-X6) and a square of (Y5-Y6)".

Then, the vertex information managing module 56 is able to determine whether the values of L11 and t L12 are maintained at a constant value or not. In other words, the vertex information managing module 56 is able to determine whether a difference between L11 and L12 is maintained within a predetermined range E1 (for example, 5m) or not, as below.

$$L11-L12<E1$$

In a case that the calculated value (L11-L12) is below the predetermined value E1 (preferably, the calculated value is zero), the vertex information managing module 56 is able to temporarily determine that a set of the two vertices M1, M2 and a set of the two vertices M5, M6 belong to a common target. As a result, for example, the vertex information managing module 56 is able to assign a common object ID to the above-mentioned vertices M1, M2, M5 and M6.

At this time, by tracking positional coordinates of the vertices M1, M2, M5 and M6 further, it becomes possible to increase the accuracy of the above-mentioned determination. In addition, by repeating this determination over time, it becomes possible to increase the accuracy of the determination furthermore.

Similarly, with regards to the vertices M3, M4, M7 and M8, it is possible to calculate the lengths L21 and L22 between the vertices by performing the same operation. As a result, for example, it becomes possible to assign a common object ID to the above-mentioned vertices M3, M4, M7 and M8.

In a case that two vertices are integrally moving, the comparison determination of coordinates, lengths or the like is not limited to a case of perfect coincidence (the difference is zero), but it can also be applied to a case of incomplete coincidence (the difference is very small). In the latter case, it is possible to perform comparison operations with a predetermined threshold value (for example, 5m) (please refer to threshold E1). Please notice that it is possible to vary the threshold value in consideration of climate conditions or the like.

In a case of a ship, a hull of a ship may be shaken, affected by rolling and/or pitching. Especially in a case of a small ship, a hull is susceptible to environmental changes from the sea due to features of small ship so that a swing is brought in a small ship in a front-rear direction and/or in a left-right direction. For this reason, in a course of the determination of coordinates or the like of vertices of a ship, a threshold may be set in consideration of shaking of a hull in the bow direction (front-rear direction) and/or in the width direction (left-right direction) of a ship.

For example, when it is predictable that a magnitude of pitching or rolling of the sea surface is large due to climatic conditions or the like and a magnitude of pitching or rolling of a hull is also large, it is possible to set the threshold relatively large. On the other hand, when it is predictable that a magnitude of pitching or rolling of a hull is small, it is possible to set the threshold relatively small.

The change of the threshold may be switched manually or automatically based on the climate information which is inputted externally.

Please notice that, in the above-mentioned example, the target detection information is transmitted from each of different radars, with regards to a common target. As a result, the object IDs may be assigned in duplicate to the target to which the vertices M1, M2, M5 and M6 belong and to the target to which the vertices M3, M4, M7 and M8 belong. In this case, when the target is displayed on a screen based on the object ID, two images may be displayed in duplicate with regards to the common target. Therefore, the vertex information managing module 56 may further include determination means in order to determine whether object IDs are assigned in duplicate to a common target or not.

For example, the vertex information managing module 56 manages each vertex information on a database so that object IDs assigned to each vertex may be associated to the database. In this case, the vertex information managing module 56 may determine periodically (for example, every 3 minutes, etc.) whether or not different object IDs are present with regards to substantially same positional coordinates (for example, 99.9% accuracy, etc.) at a certain time interval (for example, 5 minutes, etc.).

For example, with referring again to Table 1, it can be seen that the positional coordinates of M1 and M3 obtained from O1 and the positional coordinates of M2 and M4 obtained from O2 are substantially same, with a time difference of 1 minute (please refer to a latitude and a longitude in Table 1). Also, it can be seen that the positional coordinates of M5 and M6 obtained from O1 and the positional coordinates of M7 and M8 obtained from O2 are substantially same, with a time difference of 1 minute (please refer to a latitude and a longitude in Table 1). In such a case, the vertex information managing module 56 may assume that the O1 and the O2 perform radar detection about a common object.

In such a case, the vertex information managing module 56 may add a weighting coefficient with regards to the object ID assigned to the vertices M1, M2, M5 and M6 based on O1 and to the object ID assigned to the vertices M3, M4, M7 and M8 based on O2, respectively. By repeating this operation, if the vertex information managing module 56 determines that there is no difference between both of the vertex information during a predetermined time (for example, 30 minutes, etc.), then the vertex information managing module 56 may integrate the object ID assigned to the vertices M1, M2, M5 and M6 and the object ID assigned to the vertices M3, M4, M7 and M8 into a single one. In this case, preferably, the vertex information managing module 56 may integrate all relating points into the single object ID which has the smallest value if there are points to which object IDs are already assigned.

Furthermore, the administrative server 50 may use a pre-registered ship information, a positional coordinate, an azimuth, a speed and the like for the small ships O1 and O2 in which the present system is mounted. Therefore, for the small ships O1 and O2, the administrative server 50 may associate the pre-registered ship information with the object IDs specified based on the radar images obtained from the radar 10 of another ship. For this reason, for small ships O1 and O2, it is possible to display appearances of the small ships O1 and O2 on a map more accurately by combining the information of detected results of the radar 10 of another vessel and/or the known ship information.

Third Embodiment

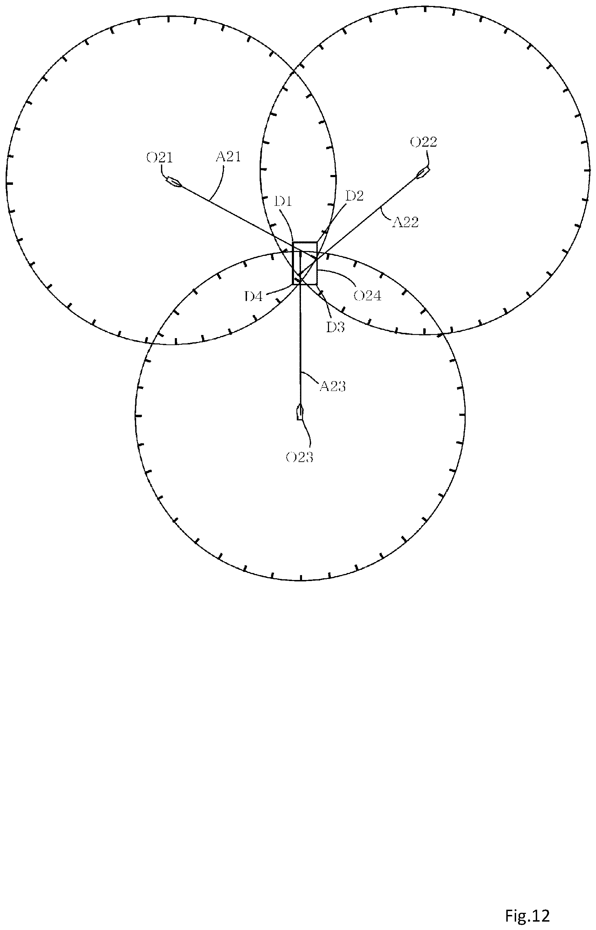

FIG. 12 illustrates an example of a conceptual diagram at a time when one large ship O24 is detected by a radar of each of the other three small ships 021, O22 and O23.

Referring to FIG. 12, three small ships 021, 022 and O23 and one large ship O24 located in their center are illustrated. The large ship 014 in the center is anchored and does not have a user terminal 30 which includes a program in accordance with the present invention. In contrast, each of the other three surrounding small ships 021, O22 and O23 has a user terminal 30 including a program according to the present invention. Each of the three surrounding small ships 021, O22 and O23 is able to detect surrounding objects (in particular, the large ship O24 in the center) by using a respective radar 10.

For example, a large ship O24 is a barge or a lighter which is navigated in a port or the like with heavy cargo.

Depending on a size, a shape and the like of the target, all of an outer edge of the target may not necessarily be extracted.

For example, in a case of the radar of the small ship 021, three vertices D1, D2, and D4 on the front side may be identified from among the four vertices D1-D4 of the large ship O24, but the farthest vertex D3 may not be clearly identified. In such a case, information corresponding to the three vertices D1, D2, D4 identified at time T21 may be transmitted to the administrative server 50.

Also, in a case of the radar of the small ship O22, three vertices D1, D2, and D3 on the front side may be identified from among the four vertices D1-D4 of the large ship O24, but the farthest vertex D4 may not be clearly identified. In such a case, information corresponding to the three vertices D1, D2, D3 identified at time T22 may be transmitted to the administrative server 50.

Also, in a case of the radar of the small ship O23, two vertices D3 and D4 on the front side may be identified from among the four vertices D1-D4 of the large ship O24, but the vertices D1 and D2 on the other side may not be clearly identified. In such a case, information corresponding to the two vertices D3 and D4 identified at time T23 may be transmitted to the administrative server 50.

The administrative server 50 is configured to accumulate the vertex information received from the respective small ships 021-023 on the database.

The vertex information managing module 56 is able to search whether each moving vertex is keeping a relative positional relation or not. In this case, if coordinates of at least three vertices are known, in addition to the positional coordinates and the length, etc., the vertex information managing module 56 is able to determine an angle formed by these vertices. If the value of the angle is kept at a constant value over time, during tracking, the vertex information managing module 56 is able to determine that the vertices belong to a common object.

For example, in the case of Fig. 12, assuming that, three vertices D1, D2 and D3 on the front side are able to be identified from the small ship O22, from among the four vertices of the target O24, but the vertex D4 on the other side is not able to be identified.

In such a case, "a length of each side of a triangle formed by the three points" and also "an angle formed by the two sides" may be calculated based on the positional coordinates of the three vertex D1-D3.

For example, it is possible to calculate a value of Cos$\theta$ from two sides of a triangle (for example, a side AB and a side AC of a triangle ABC) which is formed based on the coordinates of the above-mentioned three points, as below.

$$Cos\theta = (AB \cdot AC)/(|AB||AC|)$$

By using the arc cosine, a value of the 0 (zBAC) can be obtained from the cos$\theta$.

By tracking changes over time with regards to the determined angle, it becomes possible to determine whether the angle is kept within a certain range over time or not.

In addition, the administrative server 50 may accumulate information obtained from the small ships 021-023 so as to extract four vertices which are crowded together at a certain time range (for example, D1, D2, D3 and D4) to determine an area formed by these vertices. For example, it is possible to calculate an area based on a quadrangular area (an area of a rectangular shape) defined by the four vertices.

Similarly, the administrative server 50 side is also able to extract two, three or four vertices which are crowded together at a certain time range (for example, at least two of D1, D2, D3 and D4) to determine a distance between the vertices.

The administrative server 50 side is able to track at least one of, preferably two of, more preferably three of, and more preferably four of a group consisting of "a relative relationship of positional coordinates of a plurality of vertices", "a distance between a plurality of vertices", "an area of a region formed by a plurality of vertices" and "a movement vector of a plurality of vertices". Then, if one value or several values are kept within a predetermined range over time, the administrative server 50 side is able to determine that the vertices moving in a group are belonging to a common object. In that case, further information such as a relative speed of a plurality of vertices, an acceleration of a plurality of vertices, a center position of a plurality of vertices may be combined into the above-mentioned determination.

Assuming that the administrative server 50 side assigned a common object ID, for example, based on the values of D1, D2 and D3 from the small ship O22 (for example, based on the angle), by determining these vertices belong to a common target.

In addition, assuming that the administrative server 50 side assigned another common object ID, for example, based on the values of D1, D2 and D4 from the small ship 021 (for example, based on the angle), by determining that the vertices belong to a common target.

In addition, assuming that the administrative server 50 side assigned another common object ID, for example, based on the values of D3 and D4 from the small ship O23 (for example, based on the length), by determining that the vertices belong to a common target.

As a result, a plurality of object IDs are assigned to one object which has one main body so that three images may be displayed on a screen in duplicate based on these object IDs.

In such a case, as in the case of the second embodiment, the administrative server 50 side is able to track changes of each vertex over time in order to integrate a plurality of object IDs which are assigned to a common object into a single object ID (for example, integrate to the youngest object ID or the like).

The vertex information managing module 56 of the administrative server 50 is able to accumulate each vertex information over time. On this occasion, the vertex information managing module 56 is able to store the vertex information by making clear which ship's radar is used.

The vertex information managing module 56 of the administrative server 50 is able to group (classify) the vertex information. On this occasion, the vertex information managing module 56 may use the vertex information by making clear which ship's radar is used. Then, the vertex information managing module 56 may determine whether the moving vertex is keeping a relative positional relation among the respective groups or not.

For example, the vertex information managing module 56 of the administrative server 50 is able to trace trajectories of vertices over time with regards to each group of vertices classified by the corresponding radar. In a case that there are vertices showing trajectories that matches among a group, the vertices are classified as belonging to a common object.

The types of radars mounted on the ship 021-023 are not necessarily the same. In addition, even in a case the same radar is mounted on each ship 021-023, it does not necessarily mean that these radars are operated under the same conditions. Furthermore, each radar mounted on each ship 021-023 does not necessarily detects at a same time with a same update interval. Therefore, when a plurality of the vertex information obtained from a plurality of radars are arranged simply in time series, an error may occur in the acquired vertex information. However, as stated above, by classifying the vertex information for each radar (for each user terminal) first, and then by determining a relative movement among a plurality of groups, it becomes possible to increase the accuracy of the determination.

Fourth Embodiment

It is known that the radar image processing may be affected by problems specific to the radar. With regards to this, the present navigation assistance system 1 for a ship is configured to deal with problems of azimuth resolution and distance resolution of radar.

The "azimuth resolution" as used herein means an image resolving capacity for distinguishing two targets on a radar screen when two targets are located at a same distance from the own ship with slightly different azimuths (directions). The azimuth resolution is determined by a horizontal width of a beam emitted from the antenna which is used in a ship. Usually, as a horizontal width of a beam gets narrower, the azimuth resolution becomes higher.

The "horizontal width of a beam" as used herein means angular characteristics in a left-right direction of an emitted radio waves. Generally, the horizontal width of a beam is determined by a horizontal length of an antenna. It is known that as the horizontal length of an antenna gets longer, the horizontal width of a beam becomes narrower. In a case of a small ship, generally, a horizontal width of a beam of mounted antenna is large.

The "distance resolution" as used herein means an image resolving capacity for distinguishing two targets on a radar screen when two targets are located at a same direction from the own ship with different distances. The distance resolution is determined by a transmitted pulse width of an antenna mounted in a ship. Generally, as the transmitted pulse width gets shorter, the distance resolution becomes higher. That is to say, the distance resolving capacity is influenced by a setting of a pulse width.

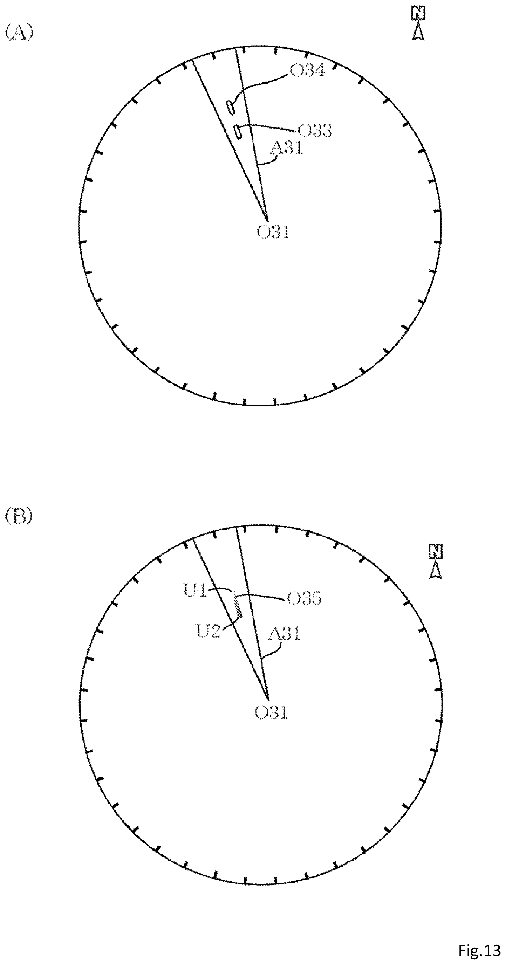

Fig. 13 illustrates examples of conceptual diagrams showing a case (A) where two small ships are detected by a radar from a ship and a case (B) where two small ships are not able to be distinguished due to a distance resolution of a radar.

Referring to Fig. 13 (A), three small ships 031, O33 and O34 are illustrated. Each is assumed to be anchored. Here, it is assumed that the two small ships O33, O34 in the center of the figure are anchored approaching each other and do not have a user terminal 30 including a program related to the present invention, respectively. It is assumed that the ship 031 positioned below has a user terminal 30 including a program related to the present invention. Therefore, the small ship 031 is able to detect surrounding objects by the radar 10. In particular, the small ship O33, O34 in the center are supposed to be detected by the radar.

Referring to Fig. 13 (B), a result of the radar detection is shown schematically. The radar detection is performed about the two small ships O33 and O34 by the radar of the small ship 031 positioned below. The two small ships O33 and O34 are located close to each other. Therefore, there is a possibility that the two small ships O33 and O34 may be displayed as a single mass by the radar of the small ship 031. This phenomenon may be resulted from a limit of the azimuth resolution or the distance resolution of the radar (please refer to number A31). As a result, the detected results of the radar may be displayed on a screen as a single object, as indicated by O35.

As illustrated in FIG. 13 (A), when two small ships O33, O34 are densely arranged in a line (vertically) as viewed from the small ship 031, the distance resolution of the radar (please refer to number A31) is likely to be a problem. On the other hand, when two small ships O33 and O34 are densely arranged laterally (not shown) when viewed from the small ship 021, the azimuth resolution of the radar is likely to be a problem.

In such a case, the image processing modules 34, 54 may extract vertices (for example, two points on a bow side and a stern side) U1 and U2 based on the radar images obtained from the information on the detected results of the radar of the small ship 031. At the time, the two small ships O33 and O34 are displayed as a single object O35. The vertex information managing module 56 of the administrative server 50 may continue processing based on the vertex information. As a result, the vertices U1, U2 of the O35 may be identified as belonging to a single object.

However, for example, in a case that the two small ships O33, O34 may no longer maintain relative relationships with each other, and each of the small ships O33, O34 may move in two different directions. Then, the image processing modules 34, 54 may become to be able to extract the vertices of the O33 and O34 (for example, two points on the bow side and the stern side, in total, four points) based on the information of the detected result of the radar of the small ship. Then, it may newly display the two small ships O33 and O34 separately.

The vertex information managing module 56 of the administrative server 50 may proceed the processing based on the vertex information. Thus, once the vertex information managing module 56 of the administrative server 50 might assign an object ID by distinguishing the vertices U1 and U2 of the O35 to be belonging to a single object. However, after that, the vertex information managing module 56 of the administrative server 50 may assign new items of object IDs based on vertices of the newly detected O33 and O34 and cancel the past object ID.

In this way, the vertex information managing module 56 of the administrative server 50 is able to track changes of each of the vertex information so that the vertex information managing module 56 is able to appropriately correct (modify) the once-given object ID.

That is, the vertex information managing module 56 is configured to accumulate the transmitted vertex information on a database or the like. When an erroneous recognition of a target occurs under influence of the azimuth resolution or the distance resolution of radar, the vertex information managing module 56 is able to correct the erroneous recognition appropriately. In this way, at the time of updating of the vertices with regards to objects, any point which no longer maintains a relative positional relation is able to be distinguished. Therefore, the vertex information managing module 56 is able to issue a new item of object ID and treats it as another object thereafter.

Fifth Embodiment

Further, the present navigation assistance system 1 for a ship is configured to deal with effects on the radar detection due to a minimum detection distance of a radar and also effects on the radar detection due to a large ship.

The "minimum detection distance" as used herein means a closest distance from the own ship to an object which is able to be displayed on a radar screen as a detected identified object. In other words, the minimum detection distance means a closest distance from the own ship to identify a target image such as another ship on a radar screen. Generally, an object which is present in front of the minimum detection distance is not able to be displayed as an image on a radar screen. For this reason, a phenomenon may occur in which a target is not displayed as an image on a radar screen even though it is present in front of the minimum detection distance.

The minimum detection distance is mainly determined by a transmitted pulse width. As the pulse width gets narrower, the minimum detection distance becomes smaller. The minimum detection distance is also related to a vertical beam width of a radar. The "vertical beam width" as used herein means a vertical angle of a radio wave emitted from a radar. Usually, in a case of a small radar used in a small fishing boat, it is known that the vertical beam width is set around 25 degrees. This is to prevent a detection angle of a vertical beam from deviating greatly even if a hull is shaken, affected by a rolling and/or a pitching.

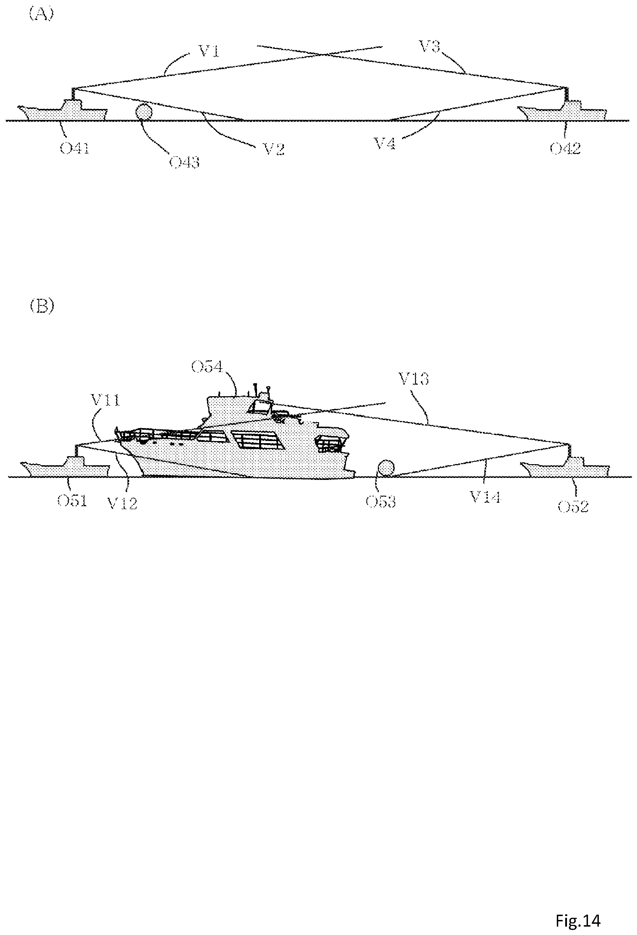

Figure 14 illustrates examples of conceptual diagrams showing a case (A) where an object may not be distinguished by a radar from a single ship due to the minimum detection distance of a radar and a case (B) where an object may not be distinguished by a radar from a single ship due to an effect of a large ship.

Referring to Fig. 14 (A), a side-view of three objects 041, O42 and O43 on the sea can be seen. The object O43 (for example, a buoy) in the center of the figure is the smallest and does not have a user terminal 30 that includes a program related to the present invention. Each of the two ships 041, O42 at the left and right of the figure has a user terminal 30 which includes a program related to the present invention.

Referring to Fig. 14 (A), it is illustrated that the object O43 in the center is present in front of the minimum detection distance of a radar of the ship 041 at the left so that it may not be able to be displayed as a target by the radar (please refer to V1, V2). In this case, the image processing modules 34 54 may not extract a vertex based on the radar image that does not display the buoy O43 based on the information on detected results of the radar of the small ship 041. The vertex information managing module 56 of the administrative server 50 may continue processing based on the vertex information. As a result, the vertex information managing module 56 may determine that the buoy O43 is not present.

However, a radar of the ship 041 at the right in Fig. 14 (A) is able to identify the buoy O43 in the center as an object since it is present at a distance longer than the minimum detection distance of the radar of the ship O42 at the right (please refer to V3, V4). In this case, the image processing modules 34 54 may be able to extract a vertex of O43 (for example, one point) based on the radar image that displays the buoy O43 based on the information on detected results of the radar of the small ship O42.

Thus, once the vertex information managing module 56 of the administrative server 50 might continue processing based on the vertex information. As a result, the vertex information managing module 56 might determine that the buoy O43 is not present and might not assign an Object ID. After that, the vertex information managing module 56 may assign a new item of Object ID based on the vertex of the O43.

In this way, the vertex information managing module 56 is able to track changes in each vertex information over time so that the vertex information managing module 56 is able to correct an object ID that has not been granted under the influence of the minimum detection distance of the radar, appropriately.

Similarly, the present navigation assistance system 1 for a ship is able to deal with an effect of a large ship on a radar.

Referring to Fig. 14 (B), a side-view of four objects 051, O52, O53 and O54 on the sea can be seen. The object O53 at the right side of the center of the figure is the smallest and does not have a user terminal 30 that includes a program related to the present invention. In addition, the object O54 at the left side of the center of the figure is the largest and does not have a user terminal 30 that includes a program related to the present invention. Each of the two ships 051, O52 at the left and right of the figure has a user terminal 30 which includes a program related to the present invention.

Referring to Fig. 14 (B), the large ship O54 in the center may be identified as an object from the radar of the small ship 051 at the left, but the small ship O53 across the large ship O54 may not be identified as an object from the radar of the small ship 051 due to the effect of the large ship O54 (please refer to V11, V12). In this case, the image processing modules 34 and 54 may extract vertices based on the radar image displaying only the large ship O54 according to the information of detected results of the radar of the small ship 051. The vertex information managing module 56 of the administrative server 50 may continue processing based on the vertex information. As a result, the existence of the large ship O54 may be identified by the vertex information managing module 56, but the existence of the small ship O53 may not be identified.

However, the ship O53 at the center may be identified by the radar of the small ship O52 at the right of Fig. 14 (B) since the ship O53 in the center is in the front of the large ship O54 (please refer to V13, V14). In that case, the image processing modules 34 and 54 may extract each of the vertices of the ship O53 in the center and the large ship O54 based on the radar images according to the information of detected results of the radar.

The vertex information managing module 56 of the administrative server 50 may continue processing based on the information of detected results of the radar. Then, once the vertex information managing module 56 might not assign the object ID to the small ship O53. However, after that, the vertex information managing module 56 may assign a new item of object ID based on the vertices of the O53 detected by the small ship O52.

In this way, the vertex information managing module 56 is able to track changes in each vertex information over time so that the vertex information managing module 56 is able to correct an object ID that has not been granted, appropriately. This modification is not limited to an effect of the large ship. Such a modification may be applied to another effect on an object on the radar such as an effect of an island, an effect of a large structure or the like.

Therefore, in a conventional radar 10, when a target object enters behind a large ship, an island or the like, the object may disappear on a radar screen under the effects of them so that information of the object may be lost. On the other hand, according to the present navigation assistance system 1 for a ship, by using a plurality of radars 10 mounted on a plurality of ships, it becomes possible to obtain information of an object which may not be tracked by a single radar.

Sixth Embodiment

Furthermore, the navigation assistance system 1 for a ship is able to deal with problems of a false image.

The "false image" as used herein means a phenomenon caused by a secondary reflection of emitted radio waves. The false image is a phenomenon in which an image appears virtually on a radar screen as if an object exists even though the object does not exist on the sea in reality. The false image may occur not only by a structure on the own ship but also by a strong signal reflected from an object around the own ship. In the prior art, it is said that such a phenomenon is unavoidable because a radar reflection from an object right opposite in a course of a ship (for example, a long bridge located at an inland sea) is strong.

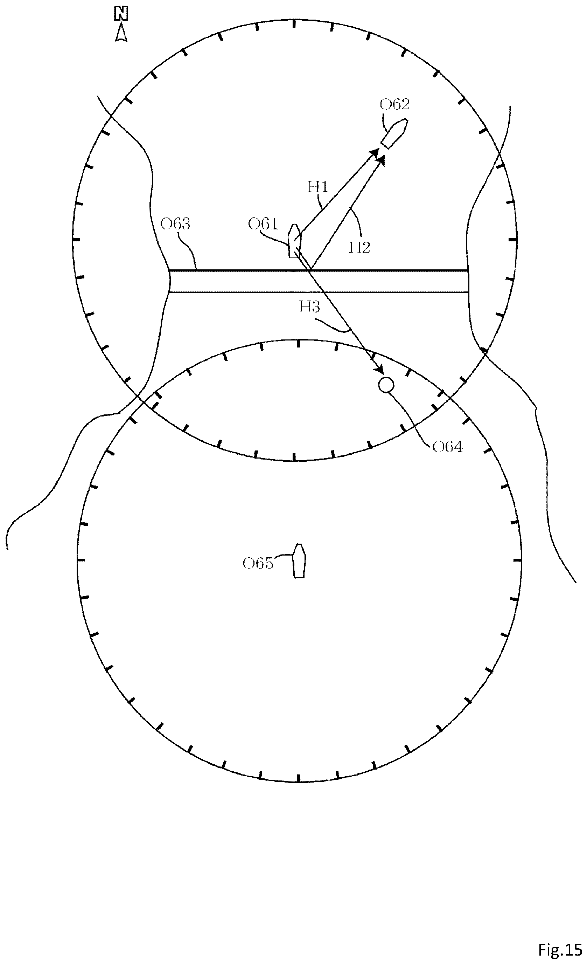

FIG. 15 illustrates an example of a conceptual diagram when two ships 061, O 65 plot an object by radar; as a result, one is affected by a false image and the other is not affected by a false image.

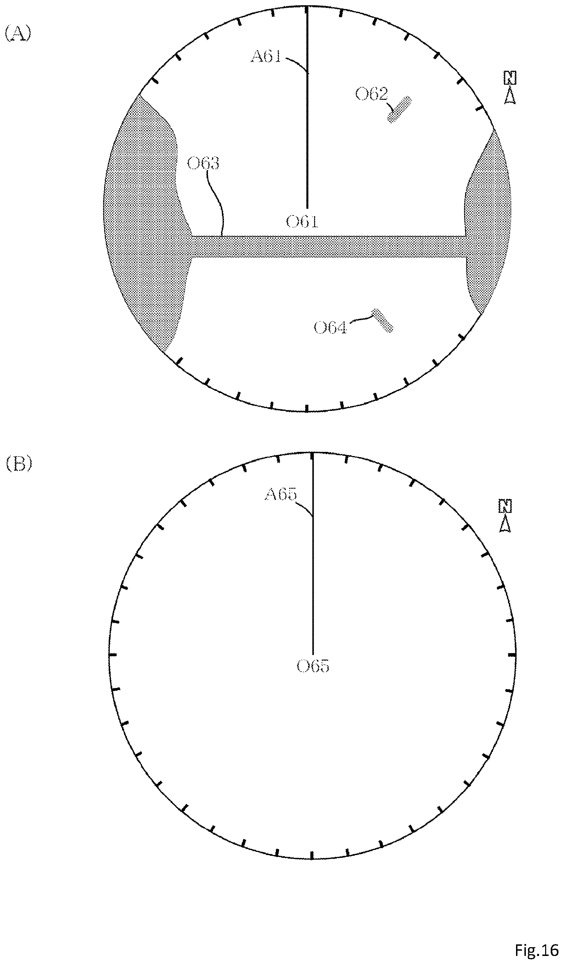

Fig. 16 illustrates an example of a conceptual diagram of results of radar detection by the two ships 061, O65, dividing the results according to (A) and (B).

Referring to Figure 15, it is assumed that three ships 061, O62 and O65 are proceeding in a vicinity of a structure O63, such as a bridge connecting two land areas. In addition, it is assumed that the ships 061 and O65 are detecting other ships by radar around the bridge O63.

When the ship 061 is near the bridge O63, there may be two types of microwaves emitted from the radar of the ship 061. One microwave proceeds toward the other ship O62 directly and it is reflected back from the target O62 to the original radar position (please refer to line H1). The other microwave proceeds to the bridge O63 and it is reflected back from the bridge. The reflected microwave further proceeds toward the other ship O62 indirectly and it is reflected back from the target O62 to the original radar position (please refer to line H2). In the former case, an image of the other ship O62 may be displayed on a radar screen as usual. But in the latter case, an image of the other ship O64 which is not supposed to exist may be displayed on a radar screen on the extended line of the ship 061 and the bridge O63 (please refer to line H3) (please refer to Fig. 16 (A)).

In such a case, the image processing module 34, 54 may extract vertices based on the radar image displaying an image of the other ship O62 and also an image of the other ship O64 which is not supposed to exist. The vertex information managing module 56 of the administrative server 50 may continue processing based on the vertex information. As a result, in addition to the image of the other ship O62, the image of the other ship O64 which is not supposed to exist may be identified as if both of them exist.

Referring again to Fig. 15, there is another ship O65 located below the ship 061 which is close to the bridge O63, away from the bridge O63. Although the ship 061 is in a position of being affected by the false image, the other ship O65 is in a position of being unaffected by the false image. As a result, the above-mentioned false image O64 may not be displayed on a radar screen from the other ship O65 (please refer to FIG. 16 (B)).

In this case, the image processing module 34, 54 may not extract vertices of the false image O64 based on the radar screen according to the information on detected results of the radar of the small ship O65 because the ship O65 is in a position of being unaffected by the secondary reflection. The vertex information managing module 56 of the administrative server 50 may continue processing based on the vertex information. As a result, the vertex information managing module 56 may output a result different from the result obtained from the small ship 061.

In such a case, when the number of detected targets is different, the vertex information managing module 56 may transmit instructions of different items of object IDs doubly to the terminals 30 and 40. The terminals 30 and 40 may receive instructions of the object IDs that conflict with each other with respect to the same time and the same positional coordinates. When the terminals 30 and 40 display outlines of contours of objects based on the object IDs, the terminals 30 and 40 may display them in a different manner from the normal display mode. For example, it is possible to display the object O62 and the object O64 (please refer to FIG. 16 (A)) while changing a color displayed on the map, a blinking state of outlines, a thickness of line and/or a mode of line (linear, dotted line, etc.) of outlines.

In such a way, if inconsistent data exist under the influence of a false image (secondary reflection of emitted radio waves), the vertex information managing module 56 may output the information of vertices identified as belonging to a common object to the terminals 30 and 40 together with the identification information (for example, a weighting coefficient may be added to the object ID with regards to the false images).

Furthermore, the vertex information managing module 56 is able to correct the item of object ID (for example, cancel the once-given object ID) when the vertex information managing module 56 determines that the object O64 is a false image by tracking changes of each of the vertex information over time.

Similarly, also in the cases of the azimuth resolution of the radar, the distance resolution of the radar, the minimum detection distance of the radar, and the effect of a large ship on the radar, when it is found out that there is a discrepancy among the detection results from multiple different radars, it is possible to change the display mode.

The present navigation assistance system 1 for a ship has been explained with a case the radar 10 is mounted on a ship.

Please notice that the target detecting device used on the ship is not limited to the radar.

For example, it is possible to use a lidar on a ship. In this case, object recognition information obtained from a lidar image is able to be used instead of the object recognition information obtained from the radar image.

In addition, it is possible to use a camera on a ship. In this case, object recognition information obtained from a camera image (for example, by using a camera for visible light or infrared ray) is able to be used instead of the object recognition information obtained from the radar image.

The image processing for obtaining vertices may be performed on the images obtained from the lidar or the camera in the same manner as in the case of the radar (please refer to Fig. 5 and Fig. 6).

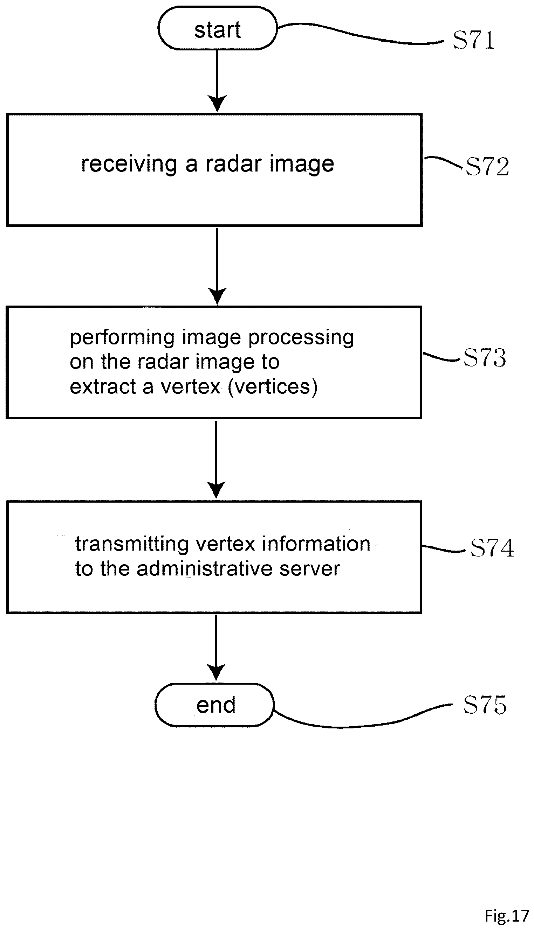

Fig. 17 illustrates an example of a conceptual diagram of a flow of processing on the user terminal 30 which may be used in the present navigation assistance system 1 for a ship.

In step S71, the user terminal 30 starts image processing, in response to a predetermined trigger signal.

In step S72, the user terminal 30 receives information of detected results from the radar 10. The information of detected results of the radar is, especially, a radar image(s) (please refer to Fig. 5 (A)).

In step S73, the user terminal 30 performs image processing on the radar image to extract a vertex (or vertices) (please refer to FIG. 5 (B)).

In step S74, the user terminal 30 transmits the extracted vertex information to the administrative server 50 (please refer to FIG. 5 (C)).

In step S75, the flow is temporarily ended. However, for example, when the information of detected results from the radar 10 is updated, the flow may be repeated again from the step S71 in a like manner.

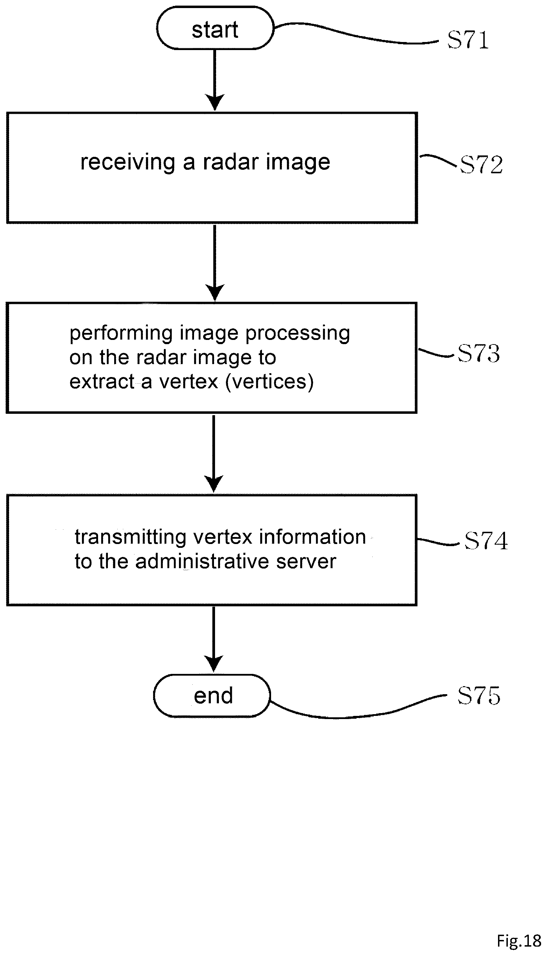

Fig. 18 illustrates an example of a conceptual diagram of a flow of processing on the administrative server (or management server) 50 which may be used in the present navigation assistance system 1 for a ship.

In step S81, the administrative server 50 starts identifying of vertex information, in response to a predetermined trigger signal.

In step S82, the administrative server 50 accumulates vertex information in a database or the like. The vertex information may include a number of (or a serial number of) vertices, a number of (or a serial number of) ships, a latitude, a longitude, a speed, an azimuth or the like.

In step S83, the administrative server 50 extracts a set of vertices belonging to a common object and assigns a common object ID to them (please refer to FIG. 6 (A)).

In step S84, the administrative server 50 transmits the object ID(s) to the terminals 30, 40. The terminals 30, 40 display an outline of a contour of a target which is corresponding to the object ID, based on the received object ID, (please refer to FIG. 6 (B)).

In step S85, the flow is temporarily ended. However, for example, when a new vertex information is transmitted from the user terminal 30, the flow may be repeated again from the step S81 in a like manner.

Therefore, the navigation assistance method for a ship according to the present invention including the following steps of:

connecting the administrative server 50 and the user terminal 30 which is connected to the target detecting device 10 so as to make possible to transmit/receive data via the network 70 (please refer to FIG. 1),
making the administrative server 50 receivable a plurality of vertices of a target extracted based on the information on detection of the target (please refer to FIG. 5 (C)),
making the administrative server 50 identifiable to determine vertices moving in a group as belonging to a common target, from among a plurality of vertices of a target which are extracted by the user terminal 30 (please refer to FIG. 6 (A)), and
sending an instruction from the administrative server 50 to the user terminal 30 so as to cause the user terminal 30 to display an outline of a contour of a target based on the vertexes identified as belonging to a common target (please refer to FIG. 6B).

The present invention further provides an assistance program for navigating a ship which makes the administrative server 50 execute the above-mentioned steps. The program is configured to make it possible to execute the steps S81-S85 of FIG. 18, at least.

As described above, the present invention provides the navigation assistance system for a ship (the administrative server for use in the navigation assistance system for a ship; the navigation assistance method for a ship; and the assistance program for navigating a ship) in which transmitting/receiving data via a network is made possible between ships and land. In addition, performing image processing on a target image obtained from a target detecting device of a small ship, and displaying an outline of a contour of a target clearly are made possible.

On the other hand, for example, in a conventional radar, a clear image of a target is not necessarily obtained. Especially, due to characteristics of the radar image, there is a case that a contour of a target may be blurred. In addition, when a target enters behind a large ship, the target may be lost. According to the present invention, vertices are extracted by performing image processing on a radar image so that it becomes possible to display a contour of a target clearly. At that time, by identifying and managing a set of vertices belonging to a common target, it becomes possible to track the target based on each vertex. By accumulating the positional coordinates of each vertex, it becomes possible to predict a future trend of each vertex based on the accumulated information.

Preferably, a network may be constructed on small ships by using inexpensive and simple portable user terminals such as smartphones, tablet terminals and the like.

Please notice that the present invention is not limited to the above-mentioned embodiments, and various modifications can be included. For example, the above-mentioned embodiments have been described in detail for the purpose of illustrating the present invention clearly. Please notice that the above-mentioned embodiments may not necessarily include the all the described configurations. It is possible to replace a configuration of one embodiment to another configuration of another embodiment, partly. In addition, it is possible to add a configuration of one embodiment to another configuration of another embodiment. Further, it is also possible to add, delete, or replace a part of a configuration of each embodiment.

Also, a part or the whole of each configuration, function, processing unit, processing means or the like described above may be implemented by hardware by designing an integrated circuit or the like. In addition, each of the above-described configurations, functions, and the like may be implemented by software by interpreting and executing a program in which the processor realizes its respective functions. It is possible to store information such as programs, tables, and files that realize various functions in a recording device such as a memory, a hard disk, an SSD (Solid State Drive) or the like and/or in a recording medium such as an IC card, an SD card, a DVD or the like.

Please notice that control lines and information lines which are considered necessary for explanation are indicated, but not all control lines and information lines are indicated on the product. In practice, almost all configurations may be considered interconnected.

EXPLANATION OF REFERENCES

| | |
|---|---|
| 1 | navigation assistance system for a ship (ship navigation assistance system) |
| 2, 4, 6 | ship |
| 10 | device for detecting a target (for example, radar) |
| 28 | instruction unit of radar |
| 30 | user terminal |
| 34, 54 | image processing module |
| 35, 45, 55 | communicating module (communication means) |
| 40 | administrative terminal on the ground (management terminal on the ground) |
| 50 | administrative server (management server) |
| 56 | vertex information managing module (vertex information management means, means for correcting the object identifying information) |
| 70, 72, 74 | network |

**Claims**

1. A management server for use in a navigation assistance system for a ship, the management server comprising:

   communication means for transmitting and/or receiving data to/from a user terminal via a network wherein the user terminal is connected to a device for detecting a target; and
   vertex information management means for identifying vertices moving in a group as belonging to a common target from among a plurality of vertices which are extracted based on information on detection of the target;
   wherein the communication means is configured to transmit an instruction to the user terminal to cause the user terminal to display an outline of a contour of the target, based on the vertices which are identified as belonging to the common target.

2. The management server according to claim 1,

   wherein the device for detecting the target is a radar and the information on detection includes a radar image, and
   wherein the user terminal is configured to extract the plurality of vertices by performing image processing on the radar image.

3. The management server according to claim 1 or 2,
   wherein the vertex information management means is configured to identify a set of vertices moving with a relative positional relation, as the vertices moving in a group and belonging to the common target.

4. The management server according to any one of claims 1-3,

   wherein the vertex information management means is configured to identify a set of vertices as the vertices moving in a group and belonging to the common target, when the set of vertices maintain at least one of a group consisting of
   a relative relationship of positional coordinates of the plurality of vertices, a distance between the plurality of vertices,
   an angle formed by the plurality of vertices,
   an area of a region formed by the plurality of vertices, and
   a movement vector of the plurality of vertices.

5. The management server according to any one of claims 1-4,
   wherein the management server is configured to transmit an instruction to the user terminal to cause the user terminal to display an outline of a contour of the target, by connecting with a line, the vertices identified as belonging to the common target.

6. The management server according to any one of claims 1-5,
   wherein the management server is configured to assign common object identifying information to the vertices which are identified as belonging to the common target.

7. The management server according to claim 6,

   wherein the device for detecting the target is a radar and the information on detection includes a radar image, and
   wherein the management server includes means for correcting the object identifying information which is assigned under influence of at least one of a group consisting of
   an azimuth resolution of the radar,
   a distance resolution of the radar,
   a minimum detection distance of the radar,
   an effect of a large ship on the radar, and
   a false image of the radar.

8. The management server according to claim 6 or 7,
   wherein the vertex information management means is configured, when identifying the common target as belonging to a plurality of targets, to assign items of object identifying information that differ for each of the plurality of targets, to each of the vertices identified as belonging to the common target.

9. The management server according to claim 6 or 7,
   wherein the vertex information management means is configured, when determining that the vertices identified as belonging to the common target and other vertices identified as belonging to another common target belong to a common target, to integrate object identifying information for the vertices and object identifying information for the other vertices into one item of object identifying information.

10. A navigation assistance method for a ship, for use in a management server, wherein the management server is connected with a user terminal for enabling the management server to transmit and/or receive data to/from the user terminal via a network, and
    wherein the user terminal is connected to a device for detecting a target, the method comprising:

    a step of receiving a plurality of vertices of the target from the user terminal wherein the plurality of vertices are extracted based on information on detection of the target;
    a step of identifying vertices moving in a group as belonging to a common target from among the plurality of vertices of the target; and
    a step of transmitting an instruction to the user terminal to cause the user terminal to display an outline of a contour of the target, based on the vertices which are identified as belonging to the common target.

11. The navigation assistance method for a ship according to claim 10, wherein the device for detecting the target is a radar and the information on detection includes a radar image, and
    wherein the user terminal is configured to extract the plurality of vertices by performing image processing on the radar image.

**12.** The navigation assistance method for a ship according to claim 10 or 11, wherein a set of vertices moving in a group with a relative positional relation is identified as the vertices moving in a group and belonging to the common target.

**13.** The navigation assistance method for a ship according to any one of claims 10-12,

wherein a set of vertices is identified as the vertices moving in a group and belonging to the common target, when the set of vertices maintain at least one of a group consisting of
a relative relationship of positional coordinates of the plurality of vertices,
a distance between the plurality of vertices,
an angle formed by the plurality of vertices,
an area of a region formed by the plurality of vertices, and
a movement vector of the plurality of vertices.

**14.** The navigation assistance method for a ship according to any one of claims 10-13 ,
wherein an instruction is transmitted to the user terminal to cause the user terminal to display an outline of a contour of the target, by connecting with a line, the vertices identified as belonging to the common target.

**15.** The navigation assistance method for a ship according to any one of claims 10-14, the method comprising
a step of assigning common object identifying information to the vertices which are identified as belonging to the common target.

**16.** The navigation assistance method for a ship according to any one of claims 10-15,

wherein the device for detecting the target is a radar and the information on detection includes a radar image, and
wherein the object identifying information is corrected when the object identifying information is assigned under influence of at least one of a group consisting of
an azimuth resolution of the radar,
a distance resolution of the radar,
a minimum detection distance of the radar,
an effect of a large ship on the radar, and
a false image of the radar.

**17.** The navigation assistance method for a ship according to claim 15 or 16,
Wherein when the common target is identified as belonging to a plurality of targets, items of object identifying information that differ for each of the plurality of targets are assigned to each of the vertices identified as belonging to the common target.

**18.** The navigation assistance method for a ship according to claim 15 or 16,
Wherein when it is determined that the vertices identified as belonging to the common target and other vertices identified as belonging to another common target belong to a common target, object identifying information for the vertices and object identifying information for the other vertices are integrated into one item of object identifying information.

**19.** An assistance program for navigating a ship, wherein the program is configured to cause a management server to execute the steps of a method according to any one of claims 10-18.

Fig. 1

Fig. 2

30

map displaying
module

39

38

map creating
module

image processing
module

34

radar detection result
receiving module

31

own ship position
receiving module

32

own ship
bow azimuth
receiving module

33

communicating
module

35

50

map creating
module

58

communicating
module

55

vertex information
managing module

56

40

map displaying
module

49

communicating
module

45

map creating
module

48

ship information
managing module

47

Fig. 3

30

map displaying
module

39

38

map creating
module

radar detection result
receiving module
31

own ship position
receiving module
32

own ship
bow azimuth
receiving module
33

communicating
module
35

50

map creating
module

55

communicating
module

58

54

image processing
module

56

vertex information
managing module

40

map displaying
module

45

communicating
module

49

48

map creating
module

47

ship information
managing module

Fig. 4

(A)

Oa

Ob

Oc

(B)

K1

Oa

K4

Ob

K5

K2

K3

Oc

K7

K6

(C)

K1

K4

K5

K2

K3

K7

K6

Fig.5

(A)

(B)

(C)

Fig.6

EP 4 082 890 A1

Fig.7

32

A1

O1

O3

A2

O2

Fig.8

(A)

B1

A1

M2

O3

M1

O1

N

(C)

M1

O3

M2

(B)

N

B2

O3    M3

M4

O2    A2

Fig.9

A1

O1

O3

A2

O2

Fig.10

Fig.11

Fig.12

(A)

(B)

Fig.13

(A)

(B)

Fig.14

Fig.15

(A)

A61

O62

N

O63

O61

O64

(B)

A65

N

O65

Fig.16

```
                    ┌─────────────┐
                    │    start    │────────────── S71
                    └──────┬──────┘
                           │
                           ▼
        ┌──────────────────────────────────┐
        │                                  │
        │      receiving a radar image     │──── S72
        │                                  │
        └──────────────────┬───────────────┘
                           │
                           ▼
        ┌──────────────────────────────────┐
        │   performing image processing    │
        │   on the radar image to          │──── S73
        │   extract a vertex (vertices)    │
        └──────────────────┬───────────────┘
                           │
                           ▼
        ┌──────────────────────────────────┐
        │   transmitting vertex information│
        │   to the administrative server   │──── S74
        │                                  │
        └──────────────────┬───────────────┘
                           │
                           ▼
                    ┌─────────────┐
                    │     end     │────────────── S75
                    └─────────────┘
```

Fig.17

start — S71

receiving a radar image — S72

performing image processing
on the radar image to
extract a vertex (vertices) — S73

transmitting vertex information
to the administrative server — S74

end — S75

Fig.18

**INTERNATIONAL SEARCH REPORT**

International application No.

PCT/JP2020/048367

**A. CLASSIFICATION OF SUBJECT MATTER**
B63B 43/20(2006.01)i; B63B 49/00(2006.01)i; G08G 3/00(2006.01)i; G01S
13/87(2006.01)i; G01S 13/91(2006.01)i
FI: G08G3/00 A; B63B43/20; B63B49/00 Z; G01S13/91 210; G01S13/87
According to International Patent Classification (IPC) or to both national classification and IPC

**B. FIELDS SEARCHED**

Minimum documentation searched (classification system followed by classification symbols)
B63B43/20; B63B49/00; G08G3/00; G01S13/87; G01S13/91

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-182730 A (FUJITSU LTD.) 05 October 2017 (2017-10-05) paragraphs [0013]-[0014], [0016], [0020], [0028], [0075] | 1-19 |
| Y | JP 2019-184438 A (PANASONIC CORP.) 24 October 2019 (2019-10-24) paragraphs [0042], [0051], [0056], [0058], [0081], fig. 9 | 1-19 |
| Y | KELLNER, D. et al., "Grid-based DBSCAN for clustering extended objects in radar data", 2012 IEEE Intelligent Vehicles Symposium, 2012, pp. 365-370 in particular, pp. 366-369, II-IV | 3-4, 12-13 |
| Y | LEE, S. J. et al., "A method for object detection using point cloud measurement in the sea environment", 2017 IEEE Underwater Technology, 2017, pp. 1-4 in particular, pp. 1-2, 1.-3 | 3-4, 12-13 |

☒ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 February 2021 (18.02.2021) | 02 March 2021 (02.03.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2020/048367

| C (Continuation). | DOCUMENTS CONSIDERED TO BE RELEVANT | |
|---|---|---|
| Category* | Citation of document, with indication, where appropriate, of the relevant passages | Relevant to claim No. |
| A | JP 2017-125802 A (PANASONIC CORP.) 20 July 2017 (2017-07-20) paragraphs [0054]-[0062] | 1-19 |
| A | JP 2006-065831 A (PENTA-OCEAN CONSTRUCTION CO., LTD.) 09 March 2006 (2006-03-09) paragraphs [0029], [0045] | 1-19 |

Form PCT/ISA/210 (continuation of second sheet) (January 2015)

**INTERNATIONAL SEARCH REPORT**

Information on patent family members

International application No.

PCT/JP2020/048367

| Patent Documents referred in the Report | Publication Date | Patent Family | Publication Date |
|---|---|---|---|
| JP 2017-182730 A | 05 Oct. 2017 | US 2017/0287340 A1<br>paragraphs [0029]-[0030], [0032], [0037], [0045], [0095] | |
| JP 2019-184438 A | 24 Oct. 2019 | WO 2019/198532 A1<br>paragraphs [0042], [0051], [0056], [0058], [0081], fig. 9 | |
| JP 2017-125802 A | 20 Jul. 2017 | US 2017/0205507 A1<br>paragraphs [0072]-[0080]<br>CN 107015226 A | |
| JP 2006-065831 A | 09 Mar. 2006 | (Family: none) | |

Form PCT/ISA/210 (patent family annex) (January 2015)

**EP 4 082 890 A1**

**REFERENCES CITED IN THE DESCRIPTION**

**Patent documents cited in the description**

- JP 2006065831 A